# EUROPEAN PATENT APPLICATION

(11) **EP 4 711 397 A1**
(43) Date of publication of application: **18.03.2026**
(21) Application number: 24200510.6
(22) Date of filing: 16.09.2024
(51) Int. Cl.: C08G 59/62, C08K 5/13, C08L 63/00

(54) **CURABLE EPOXY SYSTEMS COMPRISING A PHENOLIC POLYMER**

(71) Applicant: Rain Carbon Germany GmbH, 44579 Castrop-Rauxel (DE)
(72) Inventor: Rauser, Marian, Moers (DE); Liu, Jun, Ratingen (DE); Hoffmann, Frank, Engelskirchen (DE)
(74) Representative: Cohausz & Florack

(57) **Abstract**

Herein described is a composition comprising a bio-based phenol compound and a phenolic polymer having a number average molar mass (Mn) of from 200 to 1,500 g/mol, as well as an epoxy system comprising an epoxy resin and said composition. Further described is a composition comprising a bio-based phenol and a hydrocarbon resin.

## Description

### TECHNICAL FIELD

The invention relates to a composition comprising a bio-based phenol compound and a phenolic polymer, and to an epoxy system comprising an epoxy resin and the composition. The invention also relates to the use of the composition as accelerator for the curing of epoxy resins or as hardener for epoxy resins, and to a kit-of-parts comprising an epoxy resin, the composition, and a hardener. In another aspect of the invention, the invention relates to a composition comprising a bio-based phenol compound and a hydrocarbon resin, and to the use of the composition as a modifier, additive, and/or hydrophobizing agent. In a further aspect, the invention relates to the use of cardanol as a viscosity modifier and/or compatibilizer for phenolic polymers or hydrocarbon resins.

### BACKGROUND OF THE INVENTION

Epoxy resins constitute a broad class of polymers having good adhesion and electrical properties, high glass transition temperatures, excellent resistance to corrosion and solvents and are well-known for their use in adhesives, coatings, and composites. Those resins are characterized by epoxide groups which are cured via a crosslinking reaction with a multifunctional nucleophilic curing agent, such as amines, anhydrides, carboxylic acids, thiols or phenols. This curing process is in general accelerated or even induced by a Lewis acidic or basic catalyst. Commonly known accelerators for epoxy/amine systems include, for example, alkylated phenols, particularly bisphenol A, nonylphenol, or styrenated phenols, the combination of those alkylated phenols with tertiary amines, salicylic acid, or benzyl alcohol. Examples of commercially available accelerators that are frequently applied include Novares LS 500^{®}, Sanko MSP^{®}, or Kumnox 3111^{®}. Despite a high efficiency and an inexpensive availability all those systems are confronted by different applicational or processing issues. For example, phenol is toxic, while bisphenol A shows allergenic as well as teratogenic properties and exhibits a high crystallization tendency in formulated systems resulting in a performance decrease. Nonylphenol acts as an endocrine disruptor limiting its application possibilities; meanwhile, styrenated phenols such as Novares LS 500^{®} and salicylic acid are currently under similar scrutiny, as are reaction products with phenol. Benzyl alcohol as volatile substance causes migration effects and decreases the glass transition temperature of the cured epoxy resin, which is a critical property for many applications.

EP 0 126 625 A2 describes a phenolic product prepared by reacting a phenol compound substituted with OH, C₁₋₈ alkyl or alkenyl or a phenyl group, a -C(CH₃)₂C₆H₅ group or a
-C(CH₃)₂C₆H₄OH group with a benzene compound substituted with two independent occurrences of -C(CH₃)CH₂ or -C(CH₃)₂OH in the presence of an acidic catalyst.

US 9 074 041 B2 describes a curable epoxy resin composite formulation for preparing a composite shaped article comprising a reinforcing material and an epoxy resin composition comprising at least one epoxy resin having an average of more than one glycidyl ether group per molecule, at least one alkanolamine curing agent, and at least one styrenated phenol.

US 9 464 037 describes an adduct of styrenated phenols and hydroxylamines as well as a method of its synthesis. The resin is prepared via an acid-catalyzed alkylation reaction.

EP 4 288 478 A1 describes Novares MP50 as a recently developed accelerator for epoxy/amine curing reactions. Novares MP50 is a polymer with high phenolic content and considered a safer alternative to the conventional phenolic compounds used as accelerators, such as styrenated phenol, bisphenol A, or nonylphenol.

However, as polymeric material, Novares MP50 is a solid material at room temperature and must be pre-heated for incorporation. This requirement makes it necessary to find a suitable diluent for easy handling. Novares MP50 can be dissolved in different diluents and solvents, such as non-functional liquid resins, (benzyl-)alcohol, esters, and naturally occurring oils. In non-functional liquid resins, the resultant composition shows a reduced OH content and consequently reduced acceleration power in the curing of epoxy resins. In alcohols, particularly in benzyl alcohol, the resultant composition shows other disadvantages such as increased volatile organic compounds (VOC) content, lower chemical resistance, or lower hydrophobicity.

Moreover, reaction products of hydrocarbon resins with phenol have been used coatings. However, for the same reasons discussed above for accelerators for epoxy systems, these coatings are more and more scrutinized for their impact on human health or the environment.

There is thus a need to find other means to improve the handling of materials such as Novares MP50, which should ideally result in compositions with high OH content, low viscosity, and low color, while retaining the mechanical properties of Novares MP50 with improved chemical resistance and corrosion resistance. It was therefore an object of the present invention to provide a composition that improves on the handling of compounds such as Novares MP50 or hydrocarbon resins in the manner described above, while avoiding the disadvantages inherent in the prior art. Similarly, there was a need to find other means for providing coatings based on hydrocarbon resins that adhere similarly well to surfaces.

Other and further objects, features and advantages of the present invention will become apparent more fully from the following description.

### SUMMARY OF THE INVENTION

In one aspect, the invention provides for a composition comprising a bio-based phenol compound and a phenolic polymer, suitable for use as an accelerator and/or hardener in epoxy systems, which avoids the disadvantages inherent in the systems of the state of the art. In a second aspect, the invention provides for a composition comprising a bio-based phenol compound and a hydrocarbon resin, suitable for use as a coating, modifier, additive, and/or hydrophobing agent in rubber products, bitumen, or printing inks. In a third aspect, the invention relates to the use of cardanol as a viscosity modifier and/or compatibilizer for phenolic polymers and/or hydrocarbon resins.

Some or all of these objects are achieved with the present invention as detailed below.

According to a first aspect, the invention provides for a composition comprising a bio-based phenol compound, in particular selected from the group consisting of eugenol, thymol, guaiacol, cardanol and mixtures thereof, preferably cardanol, and a phenolic polymer having a number average molar mass (Mn) of from 200 to 1,500 g/mol, comprising a phenol compound, a linker group L and end group E, said phenolic polymer having the structure as presented in formula 1 below: 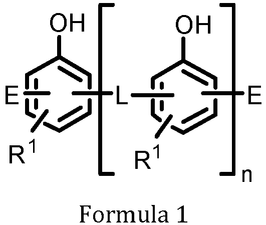 wherein the linker group L has the meaning of 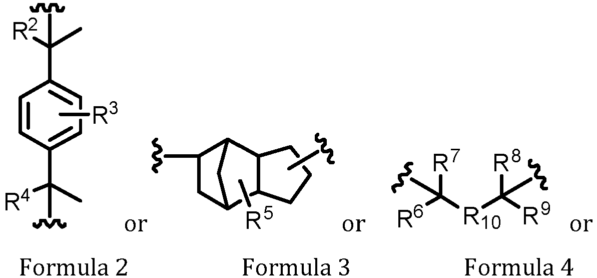 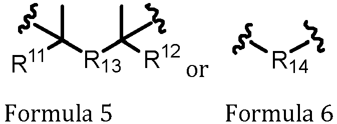 each end group E has the meaning of H or is a group of formula 2, 3, 4, 5 or 6 with only one bond to a phenol compound in formula 1 or has the meaning of 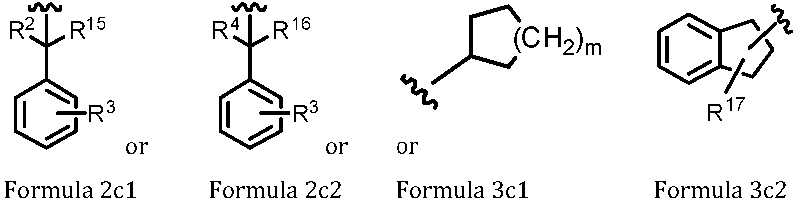 and wherein
R¹ is H, C₁₋₁₅ alkyl, C₁₋₁₅ oxyalkyl, or C₆H₅(CR¹⁸R¹⁹)ₒ-Z-, preferably H, C₁₋₁₅ alkyl, or C₁₋₁₅ oxyalkyl,
R², R⁴, R⁶, R⁷, R⁸, R⁹, R¹¹, and R¹² are independently from each other H or C₁₋₅ alkyl,
R³ and R⁵ are H, OH, NOz, halogen, C₁₋₅ alkyl, or C₁₋₅ oxyalkyl,
R₁₀ and R₁₃ are C₁₋₅ alkyl or C₅₋₆ cycloalkyl,
R₁₄ is C₅₋₁₂ cycloalkyl, optionally substituted with a methyl or an ethyl group,
R¹⁵, R¹⁶, and R¹⁷ are independently from each other H or C₁₋₅ alkyl, preferably -CH₃,
R¹⁸ and R¹⁹ are independently of each other H or CH₃,
Z is a covalent bond or -O-,
o is 1 or 0,
m is an integer from 1 to 7, and
n is an integer from 2 to 21.

The above composition shows good processability as well as excellent results as an accelerator and/or hardener in epoxy systems, performing on the same level as state-of-the-art accelerators such as Novares LS 500^{®}, a styrenated phenol.

The invention is furthermore directed to an epoxy system comprising an epoxy resin and the composition according to the first aspect of the invention. The epoxy system comprising the composition shows fast curing, good hardness development, excellent mechanical properties, and good chemical resistance against acids, bases, and organic solvents.

The invention is furthermore directed to the use of the composition according to the first aspect of the invention as an accelerator for the curing of epoxy resins, in particular in the presence of a hardener comprising amine functionalities, or as a hardener for epoxy resins, in particular in the presence of a co-hardener comprising amine functionalities. The composition performs well both as a hardener and an accelerator, showing performances comparable to state-of-the-art accelerators such as Novares LS 500^{®}, a styrenated phenol.

The invention is furthermore directed to a kit-of-parts comprising an epoxy resin, the composition according to the first aspect of the invention, and a hardener comprising amine, anhydride, phenolic, and/or thiol, in particular amine, functionalities.

According to a second aspect, the invention provides for a composition comprising a bio-based phenol compound, in particular selected from the group consisting of eugenol, thymol, guaiacol, cardanol and mixtures thereof, preferably cardanol, and a hydrocarbon resin, wherein the hydrocarbon resin has a weight-average molecular weight of 300 to 800 g/mol, preferably of 300 to 500 g/mol, more preferably of 300 to 400 g/mol, and/or a softening point according to ASTM 3461 of 10 °C to 140 °C, preferably of 10 °C to 90 °C, more preferably of 10 °C to 30 °C. The composition showed good processability and good compatibility with rubber products, bitumen, and printing inks.

The invention is furthermore directed to the use of the composition according to the second aspect of the invention as a coating, a modifier in rubber products, in particular to improve the mechanical and dynamic properties in rubber products, in bitumen, in particular as an additive and/or as a hydrophobizing agent in bitumen, in particular for asphalt, or as a modifier and/or hydrophobizing agent in printing inks. When used as a coating, in particular on a substrate, the composition is preferably used for improving the stability of the coated substrate, such as the chemical stability.

According to a third aspect, the invention provides for the use of a bio-based phenol compound, in particular selected from the group consisting of eugenol, thymol, guaiacol, cardanol and mixtures thereof, preferably cardanol as viscosity modifier and/or compatibilizer for phenolic polymers, wherein the phenolic polymer has a weight-average molecular weight of 200 to 3,000 g/mol, preferably of 500 to 2,500 g/mol, more preferably of 500 to 2,000 g/mol and/or is substantially free of formaldehyde and/or is a phenolic polymer as described in the first aspect of the invention, and/or for hydrocarbon resins, wherein the hydrocarbon resin has a weight-average molecular weight of 300 to 800 g/mol, preferably of 300 to 500 g/mol, more preferably of 300 to 400 g/mol, and/or comprises repeating units of alpha-methylstyrene and/or styrene.

By preparing a composition comprising a bio-based phenol compound in addition to the phenolic polymer of the first aspect of the invention or the hydrocarbon resin of the second aspect of the invention, it is possible to retain the respective advantages of the latter compounds while mitigating the disadvantages inherent in the state of the art.

### PREFERRED EMBODIMENTS OF THE INVENTION

In the following the various aspects of the invention are described further.

According to a preferred embodiment of the first aspect of the invention, in the formulae describing the phenolic polymer R¹ is H, C₁₋₁₀ alkyl, in particular C₁₋₈ alkyl, more particularly C₁₋₅ alkyl, or C₁₋₁₀ oxyalkyl, in particular C₁₋₈ oxyalkyl, more particularly C₁₋₅ oxyalkyl.

According to a preferred embodiment of the first aspect of the invention, the phenolic polymer has the structure as presented in formula 1 below: 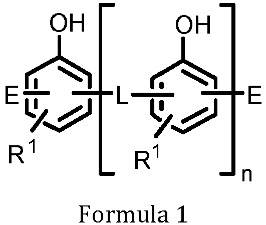 wherein the linker group L has the meaning of 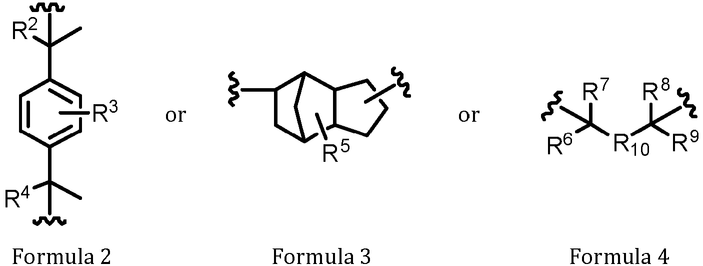 or 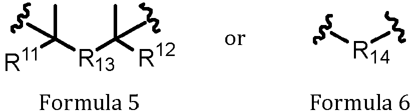 each end group E has the meaning of H or is a group of formula 2, 3, 4, 5 or 6 with only one bond to a phenol compound in formula 1, and wherein
R¹ is H, C₁₋₁₅ alkyl, or C₁₋₁₅ oxyalkyl,
R², R⁴, R⁶, R⁷, R⁸, R⁹, R¹¹ and R¹² are independently from each other H or C₁₋₅ alkyl,
R³ and R⁵ are H, OH, NOz, halogen, C₁₋₅ alkyl or C₁₋₅ oxyalkyl,
R₁₀ and R₁₃ are C₁₋₅ alkyl or C₅₋₆ cycloalkyl,
R₁₄ is C₅₋₁₂ cycloalkyl, optionally substituted with a methyl or an ethyl group, and
n is an integer of from 2 to 21.

According to a preferred embodiment of the first aspect of the invention, the phenolic polymer has the structure as presented in formula 1 below: 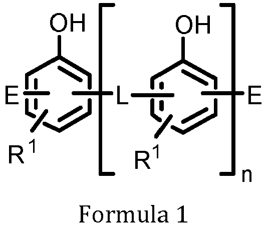 wherein the linker group L has the meaning of 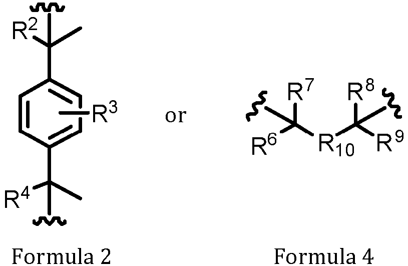 or 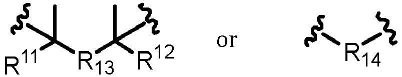 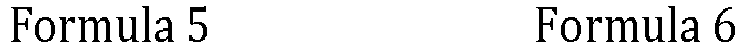 each end group E has the meaning of H or is a group of formula 2, 4, 5 or 6 with only one bond to a phenol compound in formula 1 or has the meaning of 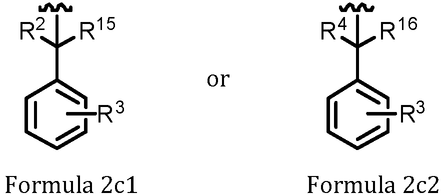 and wherein
R¹ is H, C₁₋₁₅ alkyl, or C₁₋₁₅ oxyalkyl, or C₆H₅(CR¹⁸R¹⁹)ₒ-Z-, preferably H, C₁₋₁₅ alkyl, or C₁₋₁₅ oxyalkyl,
R², R⁴, R⁶, R⁷, R⁸, R⁹, R¹¹ and R¹² are independently from each other H or C₁₋₅ alkyl,
R³ and R⁵ are H, OH, NOz, halogen, C₁₋₅ alkyl or C₁₋₅ oxyalkyl,
R₁₀ and R₁₃ are C₁₋₅ alkyl or C₅₋₆ cycloalkyl,
R₁₄ is C₅₋₁₂ cycloalkyl, optionally substituted with a methyl or an ethyl group, and
R¹⁸ and R¹⁹ are independently of each other H or CH₃
Z is a covalent bond or -O-,
o is 1 or 0,
n is an integer of from 2 to 21.

According to a preferred embodiment of the first aspect of the invention, the phenolic polymer has a number average molar mass (Mn) of from 200 to 1,500 g/mol comprising a phenol compound, a linker group L and end group E, said phenolic polymer having the structure as presented in formula 1 below: 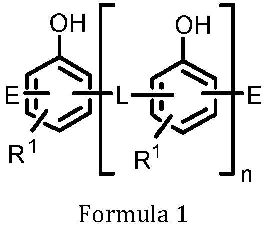 wherein the linker group L has the meaning of 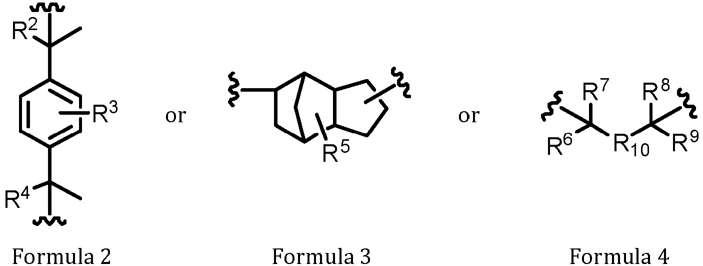 or 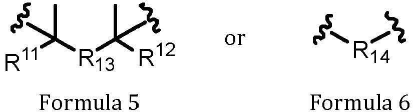 each end group E is a group of formula 2, 3, 4, 5 or 6 with only one bond to a phenol compound in formula 1 or has the meaning of 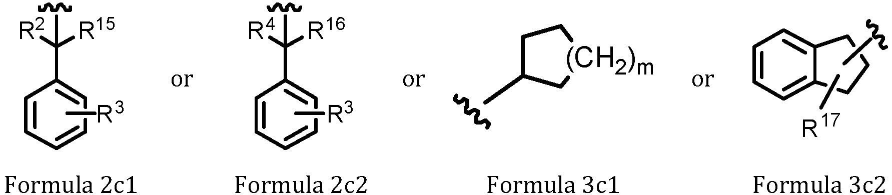 and wherein
R¹ is H, C₁₋₁₅ alkyl, or C₁₋₁₅ oxyalkyl, or C₆H₅(CR¹⁸R¹⁹)ₒ-Z-, preferably H, C₁₋₁₅ alkyl, or C₁₋₁₅ oxyalkyl,
R², R⁴, R⁶, R⁷, R⁸, R⁹, R¹¹ and R¹² are independently from each other H or C₁₋₅ alkyl,
R³ and R⁵ are H, OH, NOz, halogen, C₁₋₅ alkyl or C₁₋₅ oxyalkyl,
R₁₀ and R₁₃ are C₁₋₅ alkyl or C₅₋₆ cycloalkyl,
R₁₄ is C₅₋₁₂ cycloalkyl, optionally substituted with a methyl or an ethyl group,
R¹⁵, R¹⁶, and R¹⁷ are independently from each other H or C₁₋₅ alkyl, preferably -CH₃,
R¹⁸ and R¹⁹ are independently of each other H or CH₃
Z is a covalent bond or -O-,
o is 1 or 0,
m is an integer from 1 to 7 and
n is an integer of from 2 to 21.

According to a preferred embodiment of the first aspect of the invention, the linker group L has the meaning of 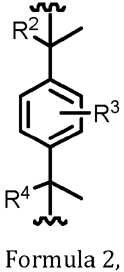 wherein R², R³, and R⁴ are independently from each other H or C₁₋₅ alkyl, preferably wherein independently from each other R³ is H, R² is H or CH₃, and R⁴ is H or CH₃, more preferably wherein R³ is H and R² and R⁴ are H or R³ is H and R² and R⁴ are CH₃.

According to a preferred embodiment of the first aspect of the invention, the linker group L has the meaning of 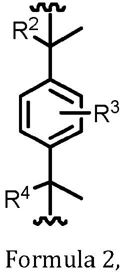 wherein R², R³, and R⁴ are as defined herein for formula 2, in particular are H. It was found that phenolic polymers, in which the linker group L has the aforementioned meaning, in particular when R², R³, and R⁴ are H, have good properties. In particular, phenolic polymers with lower softening points can be achieved. With lower softening points, the processability and/or compatibility with other compounds such as epoxide resins may be improved.

The phenolic polymer according to the first aspect of the invention can be prepared by polymerizing an optionally R¹-substituted phenol compound, wherein R¹ is as defined herein, with one of the monomers of formulae 2a to 5a or a substituted or non-substituted C₅₋₁₂ cycloolefinic compound having at least two double bonds in a series of Friedel Crafts alkylation reactions. Alternatively to the monomers of formulae 2a to 5a, a monomer of formula 2b may be employed. The reaction is performed according to the known synthesis method of a Friedel Crafts alkylation reaction. The structure of the monomers according to formulae 2a to 5a or C₅₋₁₂ cycloolefinic compound, which act as the linker L in the polymerization reaction, is selected as follows: 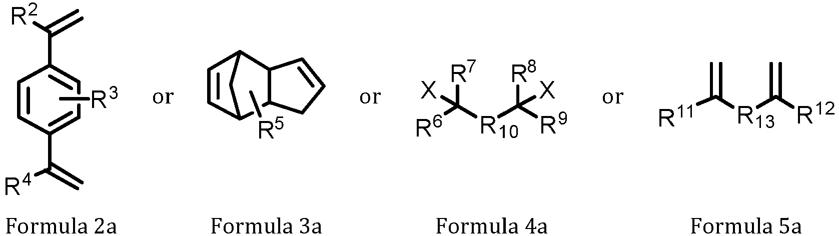 or a C₅₋₁₂ cycloolefinic compound that is optionally substituted with a methyl or an ethyl group and preferably comprises two non-conjugated double bonds,
wherein R² to R¹³ have the meaning as explained before with view to the residues of formulae 2, 3, 4, and 5, and
X is a hydroxyl group or a halogen selected of chlorine, bromine and iodine.

The structure of formula 2b is as follows: 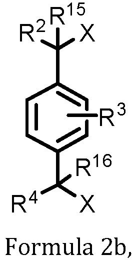 wherein R², R³, and R⁴ are as explained before with view to the residues of formula 2, R¹⁵ and R¹⁶ are independently from each other H or C₁₋₅ alkyl and X is a hydroxyl group or a halogen selected of chlorine, bromine and iodine. Preferably, the residues R², R⁴, R¹⁵ and R¹⁶ have the meaning of H and/or alkyl having 1 to 2 carbon atoms. In a particular preferred embodiment, the residues R², R⁴ have the meaning of H and the residues R¹⁵ and R¹⁶ have the meaning of -CH₃. Most preferably, the residues R¹⁵ and R¹⁶ have the meaning of -CH₃.

According to a preferred embodiment of the first aspect of the invention the residues R², R⁴, R⁶, R⁷, R⁸, R⁹, R¹¹ and R¹² of the phenolic polymer of formula 1 and accordingly in the monomers according to formulae 2a, 3a, 4a and 5a have the meaning of H and/or alkyl having 1 to 2 carbon atoms. In a particular preferred embodiment, the residues R², R⁴, R⁶, R⁷, R⁸, R⁹, R¹¹ and R¹² have the meaning of H.

Formulae 2a, 2b, 3a, 4a, 5a or the optionally methyl or ethyl substituted C₅₋₁₂ cycloolefinic compound as shown above represent the starting compounds for the polymerization of the phenolic polymer whereas the groups of formulae 2, 3, 4, 5, and 6 represent the corresponding resulting units L after polymerization in the phenolic polymer.

The starting compounds of formulae 2a, 3a, 4a, 5a and the optionally methyl or ethyl substituted C₅₋₁₂ cycloolefinic compound can be used as purified substances, but can also be used in a way, where the specific starting compound is part of a compound mixture. In particular, this can be the case if divinylbenzene is used as a starting compound in the polymerization of the phenolic polymer. In case of employing such a compound mixture the starting compound, in particular the starting monomer for the linker group L, should be present in the mixture at least in an amount of 50 wt.% to 100 wt.%, preferred 50 wt.% to 80 wt.%, based on the weight of the compounds of the mixture.

The phenol compound, which is subjected to polymerization with the compounds of formulae 2a to 5a and the optionally methyl or ethyl substituted C₅₋₁₂ cycloolefinic compound R¹⁴ to produce a phenolic polymer of formula 1 can be selected from phenol, benzylphenol, (alpha-methylbenzyl)phenol, (alpha,alphadimethylbenzyl) phenol, benzyloxyphenol, (alpha-methylbenzyloxy)phenol, (alpha,alpha-dimethylbenzyloxy)phenol, phenylphenol, phenoxyphenol, C₁₋₁₅ alkyl phenol, in particular C₁₋₁₀ alkyl phenol, more particularly C₁₋₈ alkyl phenol, even more particularly C₁₋₅ alkyl phenol, and C₁₋₁₅ oxyalkyl phenol, in particular C₁₋₁₀ oxyalkyl phenol, more particularly C₁₋₈ oxyalkyl phenol, even more particularly C₁₋₅ oxyalkyl phenol, for example, o-cresol, m-cresol, p-cresol, ethyl phenol and isopropyl phenol.

The catalyst for the polymerization can be a Lewis acid or a Brønsted acid. Preferably the catalyst is selected from AlCl₃, BF₃, ZnClz, H₂SO₄, TiCl₄ or mixtures thereof. The catalyst can be used in an amount of from 0.1 to 1 mol%. After the phenol compound is melted by heating at a temperature of 25 °C to 180 °C, preferably 35 °C to 100 °C, or dissolved in a suitable solvent (e.g. toluene), the catalyst is added. Thereafter, a monomer compound selected of formulae 2a to 5a or the optionally methyl or ethyl substituted C₅₋₁₂ cycloolefinic compound is added dropwise to the phenol compound.

Alternatively, the catalyst is added to a mixture of the phenol compound and the monomer compound of formulae 2a to 5a or the optionally methyl or ethyl substituted C₅₋₁₂ cycloolefinic compound. The reaction mixture may be cooled, for example from -10 °C to 10 °C, when adding the catalyst. The time period of addition of a compound of formulae 2a, 3a, 4a, or 5a or the optionally methyl or ethyl substituted C₅₋₁₂ cycloolefinic compound can be selected to be 10 minutes to 2 hours. The reaction can be continued for 1.5 to 2.5 hours. The polymerization reaction can be performed at a temperature of from 40 °C to 200 °C, preferably 60 °C to 150 °C, more preferably 60 °C to 100 °C. Preferably, the polymerization is performed at ambient pressure. The polymerization can be quenched by the addition of suitable additives, preferably lime. The obtained polymers can be purified by filtration and/or steam distillation.

The molar mass (Mn) of the phenolic polymer of the first aspect of the invention is in the range of from 200 to 1,500 g/mol, preferably in the range of from 350 or 400 to 800 g/mol.

The phenolic polymer of the first aspect of the invention preferably has a mass average molecular mass (Mw) of 200 to 3,000 g/mol, more preferably from 500 to 2,500 g/mol, even more preferably from 500 to 2,000 g/mol.

The phenolic polymer of the first aspect of the invention preferably has a z-average molecular mass (Mz) of 800 to 35,000 g/mol, more preferably from 900 to 25,000 g/mol, even more preferably from 1,000 to 20,000 g/mol.

The number average molecular mass (Mn), the mass average molecular mass (Mw), and the z-average molecular mass (Mz) may in particular be determined using gel permeation chromatography (GPC). In GPC, styrene-divinylbenzene copolymers may be used as column material. A 3 µm precolumn and three 3 µm 1000 Å main columns may be used. A SECcurity²-System by PSS-Polymers may be used. The substances may be detected with an RI detector. Unstabilized ULC/MS-grade THF is preferably used as eluent. The measurements are preferably run isothermal at 40 °C. For the calibration curve, ReadyCal-Kit Poly(styrene) low (Mp 266-66,000 Da) by PSS-Polymer may be used as external standard.

It was found that phenolic polymers with lower molecular weights in the aforementioned ranges exhibited improved properties, in particular improved compatibility and miscibility with epoxy resins. This resulted in accelerated curing and in some cases in improved mechanical properties and/or improved chemical resistivity.

The phenolic polymer of the first aspect of the invention advantageously has a glass transition temperature (Tg) of from -10 °C to 90 °C, preferably from -10 °C to 70 °C, more preferably from -5 °C to 50 °C, and most preferably from 0 °C to 40 °C. It was found that phenolic polymers with a glass transition temperature in the aforementioned ranges show good processability and/or good solubility in other compounds such as epoxy resins.

The glass transition temperature is preferably measured using differential scanning calorimetry (DSC). A DSC 2/400 with intra cooler from Mettler Toledo may be employed. For the measurement, aluminum crucibles with pin holes, in particular ME-26763 AL-Crucibles, may be employed. For the evaluation of the glass transition temperature, a heating-cooling-heating-cooling sequence may be employed with a heating / cooling rate of 10 K/min within a measuring window between -40 °C to 150 °C. The Tg evaluation is preferably performed in accordance with DIN 53765, in particular DIN 53765:1994-03.

The phenolic polymer of the first aspect of the invention may comprise 50 wt.% to 70 wt.% of the phenol compound. The phenolic polymer may comprise 20 wt.% to 50 wt.% of the linker group L, in particular of difunctional monomers (linker L) selected from a divinylbenzene compound, a diclyclopentadiene compound or a compound of formula 4, 5 or 6, based on the weight (mass) of the phenolic polymer.

The divinylbenzene compound is preferably a compound of formula 2, more preferably a compound of formula 2 wherein R², R³, and R⁴ are as defined herein, most preferably wherein R², R³, and R⁴ are H. The dicyclopentadiene compound is preferably a compound of formula 3. Further, the phenolic polymer may comprise 0 wt.% to 50 wt.%, in particular 5 wt.% to 40 wt.%, more particularly 10 wt.% to 35 wt.%, monofunctional monomers (end group E), based on the weight (mass) of the phenolic polymer. The term monofunctional monomer used before refers to a compound, which can be present in the starting mixture of compounds of formulae 2a, 4a, 5a and the optionally methyl or ethyl substituted C₅₋₁₂ cycloolefinic compound for the polymerization of the phenolic polymer, which however has only one double bond or one halogen capable to react in the polymerization reaction to obtain the phenolic polymer. Such modified starting compound or monofunctional starting compound acts as a chain stopper in the polymerization reaction. It can form the end group E of formula 1. Further examples of end groups E are described below. According to an embodiment, the end group E is not H. According to another embodiment, the end group E is a mixture of H and at least one further end group E as specified herein that is not H.

According to a preferred embodiment of the first aspect of the invention, the end group E may have the meaning of 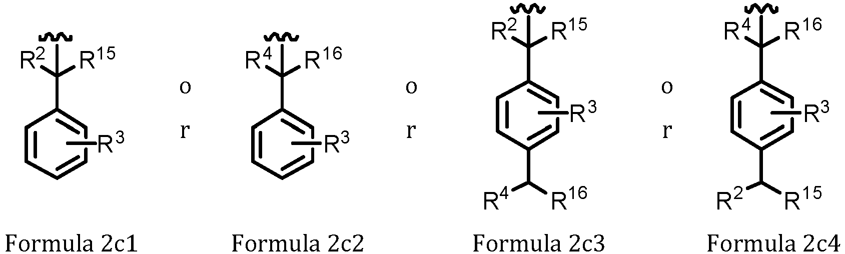 or 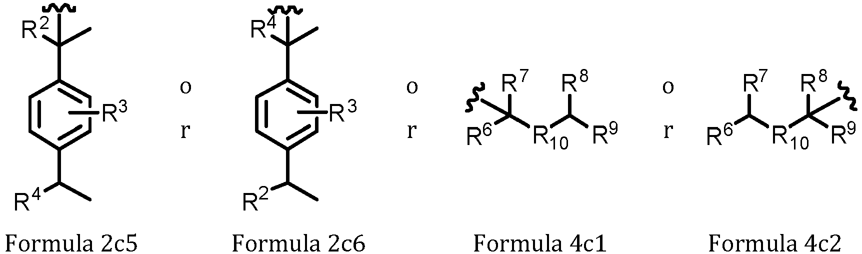 or 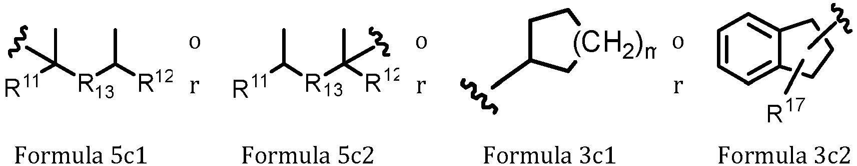 wherein R² to R¹³ have the meaning as explained before with view to the residues of formulae 2, 3, 4, and 5,
m is an integer from 1 to 7 and
R¹⁵, R¹⁶, and R¹⁷ are independently from each other H or C₁₋₅ alkyl, preferably -CH₃.

When using end groups E that are different from H, in particular end groups E with the meaning of the aforementioned formulas, the accelerating properties of the phenolic polymer can be adjusted. It was found that when the aforementioned end groups E were incorporated into the phenolic polymer, the acceleration could be increased. Moreover, the compatibility of the phenolic polymer with other compounds, in particular epoxy resins, could be improved.

The end group E may also have the meaning of a C₅₋₁₂ cycloalkyl group optionally substituted with a methyl group or an ethyl group.

Accordingly, the end group E may advantageously be obtained from monofunctional monomers having the meaning of 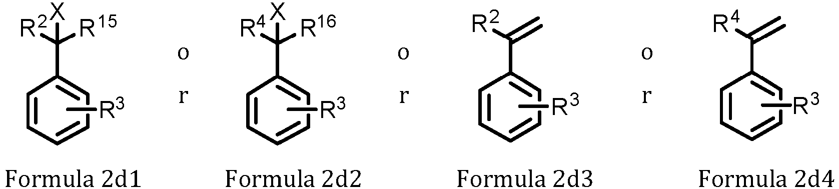 or 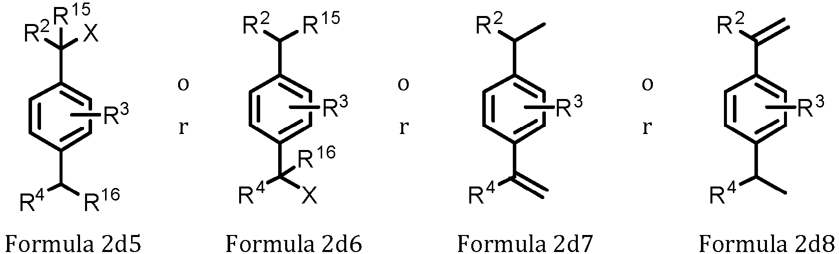 or 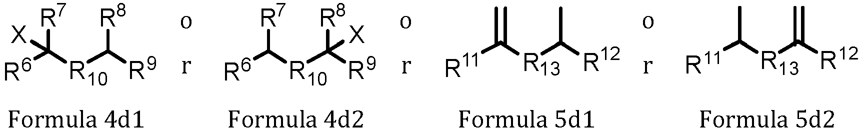 or 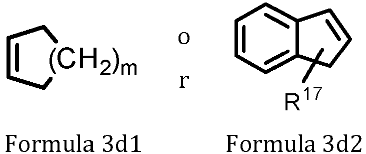 wherein R² to R¹³ have the meaning as explained before with view to the residues of formulae 2, 3, 4, and 5,
R¹⁵, R¹⁶, and R¹⁷ are independently from each other H or C₁₋₅ alkyl,
m is an integer from 1 to 7 and
X is a hydroxyl group or a halogen selected of chlorine, bromine, and iodine.

The end group E may also be obtained from a monomer having the meaning of a C₅₋₁₂ cycloolefinic compound with only one double bond optionally substituted with a methyl group or an ethyl group.

According to an embodiment of the first aspect of the invention, the end group E has the meaning of 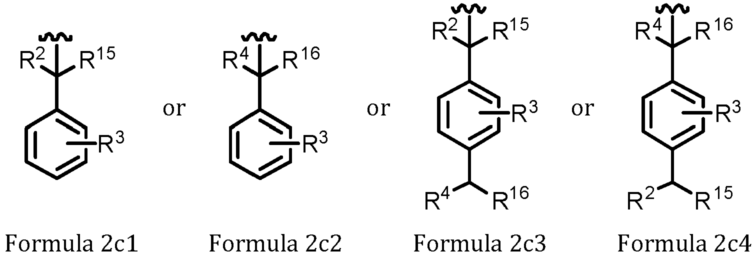 or 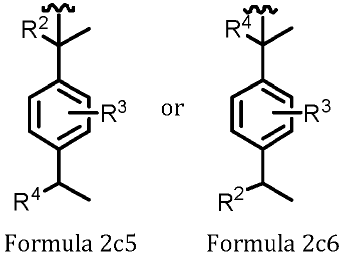 wherein R², R³, R⁴, R¹⁵, and R¹⁶ are independently from each other H or C₁₋₅ alkyl, preferably wherein independently from each other R³ is H, R² is H or CH₃, R⁴ is H or CH₃, R¹⁵ is C₁₋₅ alkyl, and R¹⁶ is C₁₋₅ alkyl. Preferably, the end group E has the meaning of formula 2c1, 2c3, or 2c5 as shown before, wherein R², R³, R⁴, R¹⁵, and R¹⁶ are independently from each other H or C₁₋₅ alkyl, more preferably wherein independently from each other R³ is H, R² is H or CH₃, R⁴ is H or CH₃, R¹⁵ is C₁₋₅ alkyl, and R¹⁶ is C₁₋₅ alkyl.

According to a preferred embodiment of the first aspect of the invention, the end group E has the meaning of 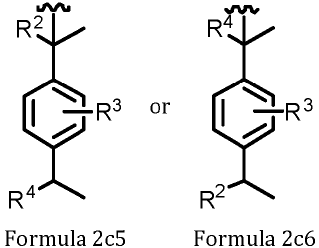 wherein R², R³, and R⁴ are independently from each other H or C₁₋₅ alkyl, preferably H.

According to a preferred embodiment of the first aspect of the invention, the linker group L has the meaning of 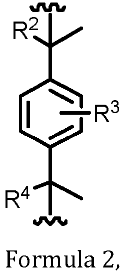 and the end group E has the meaning of 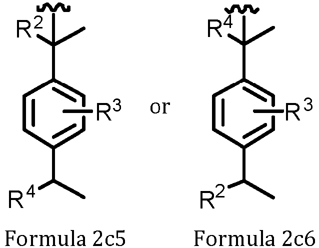 wherein R², R³, and R⁴ are independently from each other H or C₁₋₅ alkyl, preferably H.

The phenolic polymer of the first aspect of the invention may have a high OH content, preferably of 5 to 13 wt.%, particularly preferably 6 to 9 wt.% based on the weight of the phenolic polymer. The phenolic polymer of the first aspect of the invention preferably has a softening point according to ASTM 3461 up to 170 °C, more preferred 40 °C to 120 °C, most preferred 50 °C to 100 °C. The hydroxyl content of the phenolic polymer can be influenced by incorporating end groups E that are not H. High hydroxyl contents allow to improve the accelerating or hardening effect of the phenolic polymer. Also, the softening point of the phenolic polymer may be influenced by incorporating end groups E that are not H.

While it is also possible to adjust the softening point by the reaction temperature used to manufacture the phenolic polymer, this is not preferred because higher temperatures lead to higher Gardner color numbers. According to an embodiment, the phenolic polymer of the first aspect of the invention has a Gardner color number, determined according to DIN EN ISO 4630:2016-05 using acetone instead of toluene for the measurement 0 to 5, preferably from 0 to 2, more preferably from 0 to 1. An epoxy system containing a phenolic polymer with a low Gardner color number allows to prepare coatings that are almost colorless or colorless.

In a preferred embodiment of the first aspect of the invention, the composition comprising the bio-based phenol compound and the phenolic polymer comprises 1 wt.% to 70 wt.%, preferably 5 wt.% to 60 wt.%, more preferably 15 wt.% to 50 wt.%, even more preferably 25 wt.% to 40 wt.%, bio-based phenol compound, based on the mass of the composition. With amounts of bio-based phenol compound in the aforementioned ranges, compositions with desirable viscosities and OH numbers can be obtained, which additionally show good performance as accelerators and hardeners for epoxy systems without negatively affecting the mechanical and chemical properties of the resultant products.

Preferably, the composition according to the first aspect of the invention has a viscosity at 25 °C of 500 to 50,000 mPas, preferably 500 to 20,000 mPas, more preferably of 1,000 to 15,000 mPas, even more preferably of 1,000 to 5,000 mPas. A viscosity in the aforementioned range ensures good processability of the composition, as there is no need for pre-heating of the composition prior to application or for the use of a diluent or solvent. Diluents and solvents have several disadvantages: non-functional liquids, for example, reduce the OH content and also reduce the acceleration power of the composition in an epoxy system, while alcohols, for example, entail other disadvantages such as increasing VOC content, lower chemical resistance, or lower hydrophobicity.

The viscosities and complex viscosities provided herein are preferably determined at the temperature indicated with an Anton Paar MCR302 rheometer using a PP15 geometry at a share rate of 10 rads⁻¹ with a gap of 1 mm.

According to a preferred embodiment of the first aspect of the invention, the composition has an OH content of 5 wt.% to 13 wt.%, in particular 6 wt.% to 9 wt.%, more particularly 6 wt.% to 8 wt.%, based on the total mass of the composition. An OH content in the aforementioned ranges results in good acceleration performance of the composition during epoxy curing.

Advantageously, the composition according to the first aspect of the invention has a weight loss at 105 °C after 2 hours of less than 1 %, preferably of less than 0.9 %, more preferably of less than 0.8 %, based on the total mass of the composition. Compositions with weight loss in these percentages show low VOC content as well as good thermal stability during epoxy curing and further processing of the resultant product.

In a preferred embodiment of the first aspect of the invention, the bio-based phenol compound has a Gardner color number of 4 or less, preferably of 2 or less. A bio-based phenol compound with a Gardner color number of 4 or less, preferably of 2 or less does not introduce significant discoloration into the composition. This allows the composition to be used in epoxy systems that are - e.g. for aesthetic reasons - required to be almost or even entirely colorless.

Further, the bio-based phenol compound advantageously has an OH content of 5 wt.% or more, based on the mass of bio-based phenol compound. An OH content of 5 wt.% or more results in good acceleration performance of the resultant composition during epoxy curing. Further, the bio-based phenol compound preferably has an OH content of 12 wt.% or less, based on the mass of bio-based phenol compound.

Preferably, the bio-based phenol compound has an acid number of _5 mg/g_ or less, more preferably 3 mg/g or less. Bio-based phenols with acid numbers as low as the aforementioned acid numbers allow to prepare compositions of higher quality.

Preferably, the bio-based phenol compound is cardanol.

In a preferred embodiment of the first aspect of the invention, the composition has a Gardner color number of 4 or less, more preferably 2 or less. This allows the composition to be used in epoxy systems that are - e.g. for aesthetic reasons - required to be almost or even entirely colorless.

The invention is furthermore directed to an epoxy system comprising an epoxy resin and the composition according to the first aspect of the invention.

The epoxy system according to the first aspect of the invention may be a one-part epoxy systems or a two-part epoxy system. In one-part epoxy systems, the epoxy resin, the hardener, the accelerator and other components are in particular part of the same mixture. In one-part epoxy systems the hardeners are latent reactive at ambient temperature and become active at high temperature. In one-part epoxy systems, the hardener preferably comprises anhydride, thiol and/or phenol functionalities. Examples of latent hardeners are dicynamide, BF₃ complexes such as BF₃ monoethylamine complex, aromatic amines, and imidazoles such as 2-ethyl-4-methyl imidazole. However, also hardeners comprising carboxylic acid and/or isocyanate functionalities can be used in one-part systems. Accelerators or optional additional accelerators in one-part epoxy systems can in particular be amines which reveal catalytic activity at curing temperature. In two-part epoxy systems, the epoxy resin and the hardener are separate. The epoxy resin and the hardener are combined to effect cross-linking of the epoxy resin and the hardener. The hardeners in two-part epoxy systems are preferably amines or their derivates. Accelerators in two-part epoxy systems may in particular be incorporated into the hardener part. Accelerators or optional additional accelerators in two-part epoxy systems may in particular be compounds containing functionalities of amine, phenol, alcohol, thiol or carboxylic acid. In the one part or the two-part epoxy systems, the epoxy resin may be present cross-linked with the hardener.

The epoxy system according to the first aspect of the invention may in particular also comprise a hardener comprising amine, anhydride, phenolic, and/or thiol, in particular amine, functionalities. If the composition according to the first aspect of the invention is used as an accelerator, the epoxy system preferably contains a hardener. If the composition according to the first aspect of the invention is used as a hardener, the epoxy system may contain the hardener comprising amine, anhydride, phenolic, and/or thiol, in particular amine, functionalities as a co-hardener. In the epoxy systems, the epoxy resin may be present cross-linked with the hardener.

Examples of hardeners or co-hardeners comprising amine functionalities may be selected from, for example, but are not limited to, aliphatic amines, dicyandiamide, substituted guanidines, phenolic, amino, benzoxazine, anhydrides, amido amines, polyamides, polyamines, carbodiimides, urea formaldehyde and melamine formaldehyde resins, ethanolamine, ethylenediamine, diethylenetriamine (DETA), triethyleneaminetetramine (TETA), 1-(o-tolyl)-biguanide, amine-terminated polyols, aromatic amines such as methylenedianiline (MDA), toluenediamine (TDA), diethyltoluenediamine (DETDA), diaminodiphenylsulfone (DADS), and mixtures thereof.

Examples of hardeners or co-hardeners comprising anhydride functionalities are phthalic anhydride, trimellitic anhydride, nadic methyl anhydride (also referred to as methyl-5-norbornene-2,3-dicarboxylic anhydride), methyl tetrahydrophthalic anhydride, methyl hexahydrophthalic anhydride and mixtures thereof.

Examples of hardeners or co-hardeners comprising phenolic functionalities are bisphenol A, bisphenol F, 1,1-bis(4-hydroxyphenyl)-ethane, hydroquinone, resorcinol, catechol, tetrabromobisphenol A, novolacs such as phenol novolac, bisphenol A novolac, hydroquinone novolac, resorcinol novolac, naphthol novolac, and mixtures thereof.

Examples of hardeners or co-hardeners comprising thiol functionalities are aliphatic thiols such as methanedithiol, propanedithiol, cyclohexanedithiol, 2-mercaptoethyl-2,3-dimercaptosuccinate, 2,3-dimercapto-1-propanol(2-mercaptoacetate), diethylene glycol bis(2-mercaptoacetate), 1,2-dimercaptopropyl methyl ether, bis(2-mercaptoethyl)ether, trimethylolpropane tris(thioglycolate), pentaerythritol tetra(mercaptopropionate), pentaerythritol tetra(thioglycolate), ethyleneglycol dithioglycolate, trimethylolpropane tris(β-thiopropionate), tris-mercaptan derivative of tri-glycidyl ether of propoxylated alkane, and dipentaerythritol poly(β-thiopropionate); halogen-substituted derivatives of the aliphatic thiols; aromatic thiols such as di-, tris- or tetra-mercaptobenzene, bis-, tris- or tetra-(mercaptoalkyl)benzene, dimercaptobiphenyl, toluenedithiol and naphthalenedi thiol; halogen-substituted derivatives of the aromatic thiols; heterocyclic ring-containing thiols such as amino-4,6-dithiol-sym-triazine, alkoxy-4,6-dithiol-sym- triazine, aryloxy-4,6-dithiol-sym-triazine and 1,3,5-tris(3-mercaptopropyl) isocyanurate; halogen-substituted derivatives of the heterocyclic ring-containing thiols; thiol compounds having at least two mercapto groups and containing sulfur atoms in addition to the mercapto groups such as bis-, tris- or tetra(mercaptoalkylthio)benzene, bis-, tris- or tetra(mercaptoalkylthio)alkane, bis(mercaptoalkyl) disulfide, hydroxyalkylsulfidebis(mercaptopropionate), hydroxyalkylsulfidebis(mercaptoacetate), mercaptoethyl ether bis(mercaptopropionate),1l,4-dithian-2,5-diolbis(mercaptoacetate), thiodiglycolic acid bis(mercaptoalkyl ester), thiodipropionic acid bis(2-mercaptoalkyl ester), 4,4-thiobutyric acid bis(2-mercaptoalkyl ester), 3,4-thiophenedithiol, bismuththiol and 2,5-dimercapto-1,3,4-thiadiazol, and mixtures thereof.

Exemplary epoxy resins may comprise at least one epoxy resin based on bisphenol A, bisphenol F, novolac, phenol resin, epoxidized natural oils, and any polyalcohols. These compounds may also have been reacted with for example epichlorohydrin. Other exemplary epoxy resins are described in US 9 074 041 B2, column 4, lines 24 to 46.

The epoxy resins mentioned herein can be pigmented and filled systems with pigments and/or fillers, for example iron oxides, titanium dioxide, organic pigments, calcium carbonates, talcum, barium sulphonates, silica, mica, glass pearls, sand, alumina trioxide, magnesium oxides, or zinc phosphates.

The epoxy resins mentioned herein can contain reactive or non-reactive diluents. The diluents may also be referred to as thinners. The epoxy systems and/or the epoxy resins mentioned herein may in particular contain non-reactive solvents. A solvent may in particular escape entirely from the hardened product or has entirely escaped therefrom. A thinner may in particular remain in the hardened product. A low-boiling point thinner may in particular partially escape from the hardened product, e.g. up to 30 wt.% or up to 20 wt.% or up to 10 wt.% of the low-boiling point thinner, based on the total mass of the low-boiling point thinner. Examples of reactive diluents are low molecular mass compounds with 1 to 5 glycidyl functionalities with linear or cyclic backbones with 2 to 20 carbon units or ether backbones or, ester backbones. Examples of non-reactive solvents and/or diluents are acetone, ketone, esters, ether, aromatic solvents, or their mixtures.

Consequently, also the epoxy systems according to the first aspect of the invention may contain the above-mentioned pigments and/or fillers and/or reactive diluents and/or non-reactive diluents.

The epoxy resins and the epoxy systems mentioned herein may be used for coatings, for example flooring coatings, construction coatings, metal coatings, for adhesives, for sealants, particularly for structure adhesives in metal construction, in wood and concrete construction, for lamination, in particular for lamination of electronic circuits and equipment, for composites and casting applications, for chemical dowels, for electrical encapsulation. The same applies to the epoxy systems mentioned herein.

The composition according to the first aspect of the invention as part of the epoxy system according to the invention may be used as an accelerator for the curing of epoxy resins. When the composition according to the first aspect of the invention is used as an accelerator for the curing of epoxy resins a hardener comprising amine, anhydride, phenolic, and/or thiol functionalities is preferably present. More preferably, a hardener comprising amine functionalities is present.

The composition according to the first aspect of the invention described herein as part of the epoxy system according to the invention may be used as a hardener for epoxy resins. When the composition according to the first aspect of the invention is used as a hardener for the curing of epoxy resins, a co-hardener comprising amine, anhydride, phenolic, and/or thiol functionalities, in particular comprising amine functionalities, may also be present.

All the details concerning the composition according to the first aspect of the invention, the epoxy resin, the hardener, the accelerator, optional additional accelerators, and optional additional compounds described above in the context of the epoxy system apply to the use of the composition according to the first aspect of the invention accordingly.

In particular, the composition according to the first aspect of the invention described herein as part of the epoxy system according to the invention may serve at room temperature or below as an accelerator. At higher temperatures, the composition according to the first aspect of the invention may also serve as a hardener. It was found that the composition according to the first aspect of the invention yields particularly good results as a hardener for epoxy resins at a temperature of from 50 to 200 °C, preferably from 100 to 170 °C, more preferably from 120 to 160 °C.

Preferably, the composition according to the first aspect of the invention described herein as part of the epoxy system according to the invention is used at room temperature or below, in particular at -10 °C to 40 °C, more particularly at 0 °C to 25 °C as an accelerator for epoxy resins.

When the composition according to the first aspect of the invention is used as an accelerator or as a hardener for epoxy resins, the composition according to the first aspect of the invention is preferably part of an epoxy system, preferably an epoxy system according to the invention.

As hardener, the composition according to the first aspect of the invention may be used in different amounts depending on the desired degree of cross-linking. As hardener, the composition is preferably used at a ratio of OH:epoxy groups of 0.5:1 to 10:1, preferably 1:1 to 10:1, based on the total mass of the epoxy system, in particular in casting, lamination and adhesive applications.

As accelerator, the composition is preferably used in an amount of 0.5 to 20 wt.%, more preferable 5 to 15 wt.% and even more preferably 8 to 12 wt.%, or 0.5 to 30 wt.%, more preferably 0.5 to 25 wt.%, even more preferably 0.5 to 20 wt.%, 0.5 to 15 wt.%, most preferably 0.5 to 12 wt.%, based on the solid mass of the epoxy system. As accelerator, the composition is more preferably used in an amount of 0.5 to 20 wt.%, more preferable 5 to 15 wt.% and even more preferably 8 to 12 wt.%, or 0.5 to 30 wt.%, more preferably 0.5 to 25 wt.%, even more preferably 0.5 to 20 wt.%, 0.5 to 15 wt.%, most preferably 0.5 to 12 wt.%, based on the solid mass of the epoxy resin. Preferably, the composition is used as accelerator.

Moreover, the invention also provides for a kit-of-parts comprising an epoxy resin and the composition according to the first aspect of the invention described herein as part of the epoxy system according to the invention, and a hardener comprising amine, anhydride, phenolic, and/or thiol, in particular amine, functionalities. The kit-of-parts according to the invention is preferably a two-part epoxy system.

All the details concerning the composition according to the first aspect of the invention, the epoxy resin, the hardener, the accelerator, optional additional accelerators, and optional additional compounds described above in the context of the epoxy system apply to the kit-of-parts accordingly.

In the kit-of-parts, the composition and the hardener are preferably present as a mixture that optionally contains a solvent and/or a thinner. Preferably, the composition and the hardener are present as a mixture containing less than 10 wt.%, more preferably less than 5 wt.%, even more preferably less than 1 wt.%, of a solvent and/or a thinner, based on the total mass of the mixture.

The invention also provides for a formulation comprising a composition according to the first aspect of the invention and a hardener comprising amine, anhydride, phenolic, and/or thiol, in particular amine, functionalities.

The formulation advantageously contains 10 to 45 wt.%, preferably 15 to 40 wt.%, more preferably 20 to 40 wt.%, of the composition according to the first aspect of the invention, based on the weight of the hardener and the composition. The formulation may also contain a solvent and/or a thinner.

According to a preferred embodiment of the second aspect of the invention, the composition - comprising a bio-based phenol compound and a hydrocarbon resin having a weight-average molecular weight of 300 to 800 g/mol, preferably of 300 to 500 g/mol, more preferably of 300 to 400 g/mol, and/or a softening point according to ASTM D 3461 of 10 °C to 140 °C, preferably of 10 °C to 90 °C, more preferably of 10 °C to 30 °C - comprises 1 wt.% to 70 wt.%, preferably 5 wt.% to 60 wt.%, more preferably 15 wt.% to 50 wt.%, even more preferably 25 wt.% to 40 wt.%, bio-based phenol compound, based on the mass of the composition. With amounts of bio-based phenol compound in the aforementioned ranges, compositions with desirable viscosities and OH numbers can be obtained, which additionally show good performance as coatings, modifiers, additives, and hydrophobizing agents in rubber products, bitumen, and printing inks without negatively affecting the mechanical and chemical properties of the resultant products.

Preferably, the composition according to the second aspect of the invention has a viscosity at 25 °C of 500 to 50,000 mPas, preferably 500 to 20,000 mPas, more preferably of 1,000 to 15,000 mPas, even more preferably of 1,000 to 5,000 mPas. A viscosity in the aforementioned range ensures good processability of the composition, as there is no need for pre-heating of the composition prior to application or for the use of a diluent or solvent. Diluents and solvents have several disadvantages: non-functional liquids, for example, reduce the OH content, while alcohols, for example, entail other disadvantages such as increasing VOC content, lower chemical resistance, or lower hydrophobicity.

According to a preferred embodiment of the second aspect of the invention, the composition has an OH content of 5 wt.% to 13 wt.%, in particular 6 wt.% to 9 wt.%, more particularly 6 wt.% to 8 wt.%, based on the total mass of the composition. An OH content in the aforementioned ranges results in good performance of the composition as modifier. Moreover, when used as a coating, an OH content in the aforementioned ranges results in good adherence of the composition to the substrate.

Advantageously, the composition according to the second aspect of the invention has a weight loss after 2 hours at 105 °C of less than 1 %, preferably of less than 0.9 %, more preferably of less than 0.8 %, based on the total mass of the composition. Compositions with weight loss in these percentages show low VOC content as well as good thermal stability.

In a preferred embodiment of the second aspect of the invention, the bio-based phenol compound has a Gardner color number of 4 or less, preferably of 2 or less. A bio-based phenol compound with a Gardner color number of 4 or less, preferably of 2 or less does not introduce significant discoloration into the composition. This allows the composition to be used in products that are - e.g. for aesthetic reasons - required to be almost or even entirely colorless, or where the desired color of the product should not be impacted.

Further, the bio-based phenol compound advantageously has an OH content of 5 wt.% or more, based on the mass of bio-based phenol compound. An OH content of 5 wt.% or more results in good performance of the resultant composition as modifier or a coating. Further, the bio-based phenol compound preferably has an OH content of 12 wt.% or less, based on the mass of bio-based phenol compound.

Preferably, the bio-based phenol compound has an acid number of 5 mg/g or less, more preferably 3 mg/g or less. Bio-based phenols with acid numbers as low as the aforementioned acid numbers allow to prepare compositions of higher quality.

Preferably, the bio-based phenol compound is cardanol.

In a preferred embodiment of the second aspect of the invention, the composition has a Gardner color number of 4 or less, more preferably 2 or less. This allows the composition to be used in products that are - e.g. for aesthetic reasons - required to be almost or even entirely colorless, or where the desired color of the product should not be impacted.

In the following, the invention is further described by way of examples that are in no way meant to be limiting.

### DESCRIPTION OF FIGURES

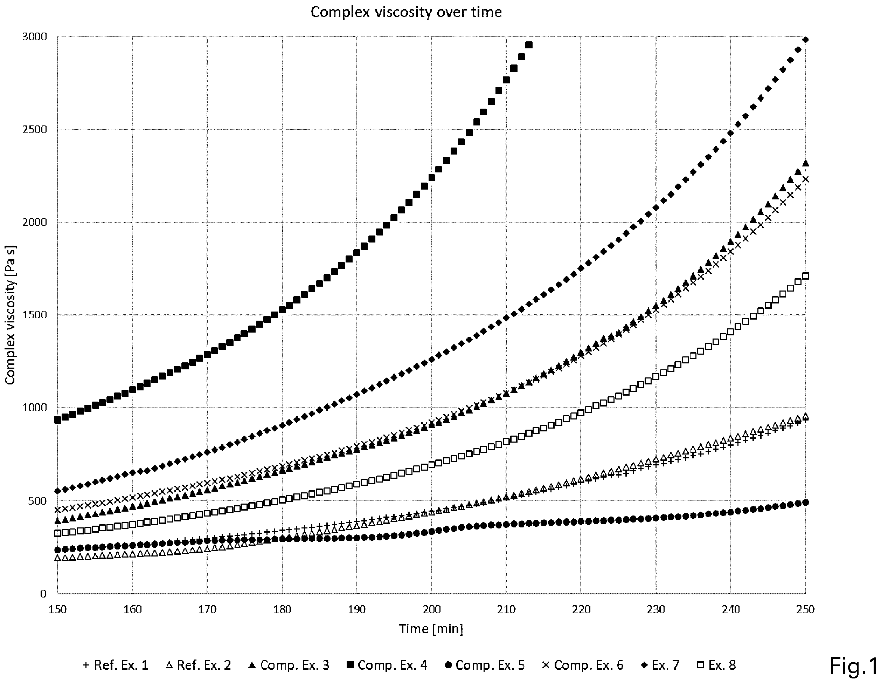

- Fig. 1: shows the complex viscosity in Pa s in dependence of the elapsed time in minutes for several epoxy systems. The plus-signs and empty triangles, respectively, show reference examples 1 and 2, comprising no accelerator and 12.5 and 6.67 wt.% benzyl alcohol, respectively. The filled triangles show comparative example 3, with Novares LS 500 as accelerator, and the filled squares show comparative example 4, with Novares MP50 as accelerator. The filled circles show comparative example 5, comprising pure cardanol as accelerator. The x-signs show comparative example 6, comprising a mix of 75 wt.% Novares MP50 and 25 wt.% benzyl alcohol as accelerator. The filled diamonds show example 7 (66.5 wt.% Novares MP50 + 33.5 wt.% cardanol), and the empty squares show example 8 (50 wt.% Novares MP50 + 50 wt.% cardanol).

### EXAMPLES

### Abbreviations

comp. = comparative
DVBP = divinylbenzene-phenol
RT = room temperature
SP = softening point

### Suppliers of chemicals

| **Chemical** | **Supplier** |
|---|---|
| Cardanol (Cardanol Cardolite NX2026) | Cardolite Corporation |
| Novares MP50 | Rain Carbon Germany |
| Benzyl alcohol | Bernd Kraft |
| Eugenol | Merck |
| Guaiacol | Merck |
| Thymol | Merck |
| Novares LS500 | Rain Carbon Germany |
| Cetepox 245 | Aditya Birla Chemicals |
| Cetepox VP 996 1H | Aditya Birla Chemicals |
| Epikote 828 | Westlake Epoxy |
| Epicure 548 | Westlake Epoxy |

### Analytical methods

### Softening point via Mettler Ring & Ball

The softening points were determined via the "Ring & Ball" method in accordance with ASTM D 3461 "Softening point of asphalt and pitch - Mettler cup and ball method". A FP 90 Central Processor in combination with a FP 83 HT Dropping Point Cell supplied by Mettler Toledo was used a testing device.

### Hydroxyl content

The hydroxyl content was determined via a potentiometric titration in accordance with DIN 53240-2 (1-methylimidazol catalyzed acetylation of free OH-groups with acetic anhydride followed by a titration with 0.5 M NaOH). The measurement was performed with an automated titration unit (Titrando in combination with Titroprozessor 840 Touch Control and Dosimate 6.2061.010) supplied by Deutsche Metrohm GmbH & Co. KG.

### Viscosity via rheometer - Viscosity of accelerator mixtures

The viscosity of the accelerator systems was measured with an Anton Paar MCR302 rheometer. An PP15 Geometry was used. The measurement was performed isothermally at 20 °C in rotation at a share rate of 10 rads⁻¹ with a gap of 1 mm.

### Complex viscosity via rheometer - Epoxy curing

The complex viscosity of the epoxy curing was measured with an Anton Paar MCR302 rheometer. An aluminum plate system (PP15 Geometry) was used. The measurement was performed isothermally at 20 °C in oscillation mode at a frequency of 10 rads⁻¹ with a shear gap of 1 mm. The deformation was started at 10 % and was reduced to 1 % with 0.2 %/min. After the deformation reduction to 1 % the rest of the measurement was performed at this deformation level until a torque of 100 mNm was reached.

### Weight loss measurement

The weight loss measurements were performed following DIN EN ISO 325. Either 2 g of the pure the accelerator system (pure substance or mixture as shown in Table 2) or of the corresponding formulation (Table 2) were submitted to an aluminum shell with 4 cm diameter which was subsequently placed in a ventilated oven (FD260-230V supplied by company Binder GmbH) for 2 h at 105 °C. After expiration of the 2 h storage time the weight of the sample was subsequently measured.

### Shore D hardness

For the shore D hardness measurements 0.6 cm thick test specimen were prepared based on the formulations shown in Table 4. The curing/storing between the measurements was performed isothermally as stated either at RT or at 10 °C. The measurements were performed in accordance with ASTM D 2240 and ISO 48-4 with a Zwick Roell 3116 shore D hardness test device.

### Drying time via dryness recorder

The drying time for epoxy formulations shown in Table 4 was measured in accordance with ASTM D 5895 with a drying recorder BK.3 supplied by Mickle Laboratory Engineering Co. LTD. For the drying time measurements 0.74 µm thick coatings based on the formulations shown in Table 4 were applied to a glass sample carrier at room temperature. Afterwards, the sample carriers were directly applied to the measuring device, the needle placed on the sample strip, and the running speed of the needle adjusted to a measurement period of 24 h. Dryness degree was evaluated according to the criteria shown in Table 1.

### Tensile strength and maximum elongation via tensile testing

The tensile strength and elongation at break of the cured epoxy resins were measured via a Shimadzu Autograph AGS-X tensile testing machine. Each of the different mixtures shown in Table 5 were poured in defined bone-shaped molds and stored at room temperature for 2 weeks. Prior to the measurement the dimensions of the samples were determined. The measurements were performed with a starting gauge length of 130.0 mm at room temperature with a speed of 10 mm/min.

### Chemical resistance test

10 g of each of the different mixtures shown in Table 4 were poured in 5 defined molds, which were stored at room temperature for 2 weeks. Afterwards the sample weight was determined followed by the immersion of the respective sample in a 100 mL closed glass bottle filled with 90 mL of the distinct test media. The following test media were employed:
1. aqueous solution of acetic acid (10 wt.%),
2. aqueous solution of sodium hydroxide (5 wt.%),
3. xylene,
4. deionized water.

Samples were taken out from the glass bottles, cleaned from residual test media and weighed at day 1, 7, and 42. After the weighing the samples were returned to the glass bottle.

### Application of the accelerator mixture in epoxy systems

Mixtures of a DVBP resin (Novares MP50, properties shown in Table 1) and biobased phenolic compounds are suitable as modifier in coatings, adhesives, and composite formulations, particularly in epoxy-based systems as accelerator and chemical resistance enhancer. To demonstrate the synergistic properties of the mixtures in comparison to the single-cell systems as well as comparable non-biobased phenolic accelerators, application trials in different epoxy coating formulations were performed.

**Table 1: Properties of DVBP resin Novares MP50.**

| **SP [°C]** | **OH content [wt.%]** | **Mn [g/mol]** | **Mw [g/mol]** | **Mz [g/mol]** |
|---|---|---|---|---|
| 50 | 8.1 | 514 | 739 | 1076 |

**Table 2: Viscosities of the used accelerator systems.**

| **Example** | **Accelerator system (wt.%)** | **Viscosity (at 20 °C) [mPas]** |
|---|---|---|
| 1 (comp.) | Novares MP50 (100) | solid |
| 2 (comp.) | Cardanol (100) | 48 |
| 3 (comp.) | Novares LS 500 (100) | 1015 |
| 4 (comp.) | Novares MP50 (75) + Benzyl alcohol (25) | 11460 |
| 6 | Novares MP50 (66.5) + Cardanol (33.5) | 16049 |
| 7 | Novares MP50 (50) + Cardanol (50) | 1657 |
| 8 | Novares MP50 (66.5) + Eugenol (33.5) | 12528 |
| 9 | Novares MP50 (50) + Eugenol (50) | 769 |
| 10 | Novares MP50 (66.5) + Guaiacol (33.5) | 7470 |
| 11 | Novares MP50 (50) + Guaiacol (50) | 470 |
| 12 | Novares MP50 (66.5) + Thymol (33.5) | 31202 |
| 13 | Novares MP50 (50) + Thymol (50) | 1930 |

As can be seen from Table 2, addition of a bio-based phenol compound (cardanol, eugenol, guaiacol, thymol) to the DVBP resin Novares MP50 resulted in a marked decrease in viscosity in all cases, with the viscosity decreasing further as the ratio of bio-based phenol compound was increased. Values comparable to the comparative example 4 employing benzyl alcohol as a thinner were achieved, as well as viscosities comparable to the state of the art Novares LS 500, a styrenated phenol (comp. example 3). By adjusting the ratio of the chosen bio-based phenol compound, it is thus possible to tune the viscosity of the composition.

Notably, the OH content is directly connected to the acceleration properties of the accelerator system. The shown accelerator systems are not chemically incorporated during the curing process. Thus, the volatility indicated by its weight loss under temperature treatment has a major impact on the environmental properties of the cured coating. Taking both parameters into account, the combination of cardanol with the DVBP resin shows its synergetic effect, as the mixture has a comparable OH content to other phenolic accelerators like Novares LS 500 but also a very low volatility (see Table 3).

**Table 3: OH content and weight loss of accelerator systems.**

| **Example** | **Accelerator system (wt.%)** | **OH content [wt.%]** | **Weight loss (at 105 °C, 2 h) [wt%]** |
|---|---|---|---|
| 1 (comp.) | Novares MP50 (100) | 8.1 | 1.2 |
| 2 (comp.) | Cardanol (100) | 5.6 | 0.2 |
| 3 (comp.) | Novares LS 500 (100) | 7.1 | 3.0 |
| 4 (comp.) | Novares MP50 (75) + Benzyl alcohol (25) | 9.9 | 31.0 |
| 6 | Novares MP50 (66.5) + Cardanol (33.5) | 7.2 | 0.6 |
| 7 | Novares MP50 (50) + Cardanol (50) | 6.8 | 0.5 |

As can be seen from Table 3, examples 6 and 7 comprising both the DVBP resin and cardanol show an OH content comparable to that of Novares LS 500 (comp. example 3). They also show a weight loss at 105 °C that is lower than that of Novares LS 500 (comp. example 3) and considerably lower than that of the composition comprising benzyl alcohol as thinner (comp. example 4).

### General procedure for the curing of epoxy resins

A binder (Cetepox 245R^{®} or Epikote 828^{®}) and a mixture of curing agent (Cetepox VP 996 1H^{®} or Epicure Agent 548^{®}) and the corresponding accelerator as shown in Table 4 were added to a 100 mL plastic cup at room temperature and mixed in a speed mixer at 2500 rpm for 1 min. Afterwards the corresponding amounts of sample were extracted for the different application tests. Unless otherwise stated, curing was conducted at room temperature. The formulations for the epoxy systems are given in Tables 4 and 5.

**Table 4: Formulation of tested epoxy systems excluding tensile tests.**

| **Example** | **Accelerator system (wt.%)** | **Accelerator system [g]** | **Cetepox 245R^{®} [g]** | **Cetepox VP 996 1H^{®} [g]** | **Benzyl alcohol [g]** |
|---|---|---|---|---|---|
| 1 (Ref. 1) | - | - | 66.67 | 20.83 | 12.5 |
| 2 (Ref. 2) | - | - | 71.11 | 22.22 | 6.67 |
| 3 (comp.) | Novares LS 500 | 5.83 | 66.67 | 20.83 | 6.67 |
| 4 (comp.) | Novares MP50 | 5.83 | 66.67 | 20.83 | 6.67 |
| 5 (comp.) | Cardanol | 5.83 | 66.67 | 20.83 | 6.67 |
| 6 (comp.) | Novares MP50 (75) + Benzyl alcohol (25) | 5.83 | 66.67 | 20.83 | 6.67 |
| 7 | Novares MP50 (66.5) + Cardanol (33.5) | 5.83 | 66.67 | 20.83 | 6.67 |
| 8 | Novares MP50 (50) + Cardanol (50) | 5.83 | 66.67 | 20.83 | 6.67 |

**Table 5: Formulation of tested epoxy systems for tensile tests.**

| **Example** | **Accelerator system (wt.%)** | **Accelerator system [g]** | **Epikote 828^{®} [g]** | **Epicure 548^{®} [g]** |
|---|---|---|---|---|
| 9 (Ref. 3) | - | - | 56.45 | 34.45 |
| 10 (comp.) | Novares LS 500 | 9.1 | 56.45 | 34.45 |
| 11 (comp.) | Novares MP50 | 9.1 | 56.45 | 34.45 |
| 12 (comp.) | Cardanol | 9.1 | 56.45 | 34.45 |
| 13 (comp.) | Novares MP50 (75) + Benzyl alcohol (25) | 9.1 | 56.45 | 34.45 |
| 14 | Novares MP50 (66.5) + Cardanol (33.5) | 9.1 | 56.45 | 34.45 |
| 15 | Novares MP50 (50) + Cardanol (50) | 9.1 | 56.45 | 34.45 |

### Effects of acceleration

20 g of the above shown formulations (Table 4) were extracted for a rheological analysis, which was directly started after the mixing of the substances and transferal to the rheometer. The curing process was analyzed via a rheometer in accordance with the general procedure at 20 °C. The time-dependent results of the rheological analysis are shown in Table 6 and Figure 1. Table 6 displays representative time points of the time-viscosity relationship during the rheology measurement. Figure 1 shows the complete development of the viscosity over time. It is clear that the compositions comprising Novares MP50 and cardanol (examples 7 and 8) show significantly greater acceleration power than the reference examples 1 and 2 (employing no accelerator) as well as the comparative example employing only cardanol as accelerator (comp. example 5). In fact, cardanol by itself seems to slow down the curing process. Surprisingly, the compositions comprising Novares MP50 and cardanol (examples 7 and 8) show a comparative performance to the state of the art Novares LS 500 (comp. example 3) and the combination of Novares MP50 with benzyl alcohol (comp. example 6).

**Table 6: Complex viscosity (η*) in dependence of time of the epoxy systems shown in Table 4 (formulations 1 to 8).**

| **Time [min]** | **Complex viscosity [Pa s]** | | | | | | | |
|---|---|---|---|---|---|---|---|---|
| | **Ex. 1 (Ref. 1)** | **Ex. 2 (Ref. 2)** | **Ex. 3 (comp.)** | **Ex. 4 (comp.)** | **Ex. 5 (comp.)** | **Ex. 6 (comp.)** | **Ex. 7** | **Ex. 8** |
| 1 | 18.5 | 8.9 | 27.7 | 25.2 | 40.1 | 13.9 | 18.7 | 10.6 |
| 150 | 234.4 | 192.7 | 390.9 | 935.0 | 234.6 | 449.7 | 551.8 | 323.8 |
| 151 | 237.3 | 194.5 | 398.2 | 950.0 | 237.4 | 456.2 | 561.1 | 328.3 |
| 152 | 240.1 | 196.6 | 405.8 | 965.3 | 240.0 | 462.8 | 570.8 | 333.0 |
| 153 | 243.1 | 198.6 | 413.6 | 980.9 | 242.7 | 469.4 | 580.5 | 337.7 |
| 154 | 246.0 | 200.5 | 421.5 | 996.7 | 245.4 | 476.0 | 590.4 | 342.4 |
| 155 | 248.8 | 202.3 | 429.3 | 1012.9 | 247.6 | 482.8 | 600.2 | 347.1 |
| 156 | 251.9 | 204.5 | 437.2 | 1029.2 | 249.9 | 489.6 | 610.5 | 352.0 |
| 157 | 254.9 | 206.9 | 445.0 | 1046.0 | 252.5 | 496.4 | 620.7 | 357.0 |
| 158 | 258.1 | 209.1 | 453.1 | 1062.8 | 255.1 | 503.4 | 631.2 | 362.1 |
| 159 | 260.9 | 211.2 | 461.2 | 1079.6 | 257.4 | 510.6 | 641.9 | 367.4 |
| 160 | 263.7 | 213.2 | 469.2 | 1096.9 | 259.6 | 517.7 | 653.2 | 372.8 |
| 161 | 266.6 | 215.0 | 477.4 | 1114.4 | 261.7 | 524.9 | 656.7 | 378.2 |
| 162 | 269.6 | 217.3 | 485.8 | 1132.3 | 263.8 | 532.5 | 662.9 | 383.8 |
| 163 | 273.3 | 219.7 | 494.5 | 1150.5 | 266.0 | 540.1 | 674.4 | 389.5 |
| 164 | 276.3 | 222.4 | 503.4 | 1169.1 | 268.4 | 547.9 | 686.9 | 395.2 |
| 165 | 279.5 | 225.0 | 512.2 | 1187.8 | 271.1 | 555.6 | 699.1 | 401.1 |
| 166 | 283.2 | 227.7 | 521.3 | 1207.0 | 273.6 | 563.5 | 711.3 | 407.2 |
| 167 | 286.8 | 230.6 | 530.6 | 1226.7 | 276.0 | 571.4 | 723.5 | 413.2 |
| 168 | 290.3 | 234.2 | 539.8 | 1246.6 | 278.6 | 579.6 | 735.8 | 419.4 |
| 169 | 293.5 | 238.0 | 549.2 | 1267.2 | 281.1 | 587.6 | 748.3 | 425.6 |
| 170 | 297.0 | 241.9 | 558.8 | 1288.0 | 283.5 | 595.8 | 761.0 | 432.0 |
| 171 | 300.8 | 246.3 | 568.5 | 1309.5 | 285.2 | 604.3 | 774.1 | 438.4 |
| 172 | 304.9 | 251.0 | 578.6 | 1331.4 | 286.6 | 612.8 | 787.7 | 445.0 |
| 173 | 308.9 | 256.5 | 588.6 | 1354.0 | 287.8 | 621.5 | 801.8 | 451.7 |
| 174 | 313.1 | 262.6 | 598.8 | 1377.0 | 288.8 | 630.3 | 816.2 | 458.5 |
| 175 | 317.1 | 268.7 | 609.2 | 1400.6 | 289.7 | 639.3 | 830.9 | 465.5 |
| 176 | 321.1 | 275.9 | 619.8 | 1424.7 | 290.5 | 648.4 | 846.0 | 472.7 |
| 177 | 325.2 | 282.3 | 630.2 | 1449.4 | 291.3 | 657.8 | 861.2 | 480.0 |
| 178 | 330.0 | 288.8 | 641.1 | 1474.8 | 292.1 | 667.2 | 876.6 | 487.4 |
| 179 | 335.1 | 294.8 | 651.9 | 1500.8 | 292.8 | 676.8 | 891.8 | 495.1 |
| 180 | 339.5 | 300.2 | 663.0 | 1527.5 | 293.4 | 686.6 | 907.4 | 502.8 |
| 181 | 344.0 | 306.4 | 674.2 | 1554.7 | 294.1 | 696.4 | 923.0 | 510.7 |
| 182 | 348.7 | 312.5 | 685.5 | 1582.7 | 294.7 | 706.4 | 938.7 | 518.8 |
| 183 | 353.4 | 319.3 | 697.1 | 1611.6 | 295.4 | 716.7 | 954.6 | 527.0 |
| 184 | 358.1 | 325.9 | 708.8 | 1641.0 | 296.1 | 727.0 | 970.7 | 535.4 |
| 185 | 362.7 | 332.1 | 720.8 | 1671.3 | 296.8 | 737.5 | 987.1 | 543.9 |
| 186 | 367.4 | 339.0 | 732.8 | 1702.4 | 297.4 | 748.1 | 1004.0 | 552.6 |
| 187 | 372.2 | 345.6 | 744.7 | 1734.3 | 298.2 | 758.9 | 1020.9 | 561.4 |
| 188 | 376.8 | 352.4 | 756.2 | 1767.2 | 299.1 | 770.0 | 1037.7 | 570.2 |
| 189 | 381.6 | 359.0 | 766.7 | 1801.2 | 300.0 | 781.4 | 1055.0 | 579.3 |
| 190 | 386.8 | 366.3 | 777.4 | 1835.9 | 301.0 | 793.0 | 1072.5 | 588.7 |
| 191 | 392.5 | 373.8 | 788.7 | 1871.7 | 302.5 | 804.7 | 1090.2 | 598.0 |
| 192 | 398.1 | 381.5 | 800.4 | 1908.3 | 304.2 | 816.6 | 1108.1 | 607.6 |
| 193 | 404.1 | 388.7 | 812.4 | 1945.9 | 306.5 | 828.9 | 1126.6 | 617.3 |
| 194 | 409.3 | 395.8 | 824.9 | 1984.2 | 309.3 | 841.3 | 1145.2 | 627.3 |
| 195 | 414.7 | 402.8 | 837.7 | 2023.8 | 312.5 | 854.0 | 1164.3 | 637.6 |
| 196 | 420.3 | 410.1 | 851.0 | 2064.3 | 316.0 | 867.1 | 1183.4 | 648.2 |
| 197 | 426.0 | 417.3 | 864.7 | 2106.1 | 320.1 | 880.4 | 1202.9 | 658.8 |
| 198 | 431.7 | 424.3 | 878.8 | 2149.2 | 324.7 | 893.8 | 1222.5 | 669.7 |
| 199 | 437.8 | 431.6 | 893.3 | 2193.2 | 329.8 | 907.6 | 1242.3 | 680.8 |
| 200 | 444.0 | 439.0 | 908.2 | 2238.6 | 335.4 | 921.6 | 1262.4 | 692.0 |
| 201 | 449.0 | 446.5 | 923.5 | 2284.9 | 341.0 | 935.9 | 1282.8 | 703.5 |
| 202 | 455.6 | 454.4 | 939.2 | 2332.8 | 346.4 | 950.7 | 1303.5 | 715.1 |
| 203 | 462.2 | 462.5 | 955.0 | 2382.1 | 351.4 | 965.8 | 1324.5 | 727.0 |
| 204 | 469.0 | 470.5 | 971.6 | 2432.9 | 355.8 | 981.1 | 1346.1 | 739.2 |
| 205 | 475.7 | 478.7 | 988.5 | 2485.1 | 359.7 | 996.7 | 1368.3 | 751.7 |
| 206 | 482.4 | 487.0 | 1005.7 | 2538.6 | 362.9 | 1012.6 | 1390.4 | 764.3 |
| 207 | 489.6 | 495.4 | 1023.5 | 2593.7 | 365.6 | 1028.9 | 1413.0 | 777.3 |
| 208 | 497.5 | 504.2 | 1041.7 | 2650.4 | 368.1 | 1045.6 | 1436.1 | 790.5 |
| 209 | 505.2 | 512.8 | 1060.2 | 2708.4 | 370.3 | 1062.6 | 1459.5 | 804.1 |
| 210 | 513.0 | 521.5 | 1079.3 | 2767.8 | 372.3 | 1080.2 | 1483.6 | 818.0 |
| 211 | 520.8 | 530.5 | 1098.9 | 2828.5 | 374.2 | 1098.0 | 1507.9 | 832.1 |
| 212 | 529.0 | 539.5 | 1119.3 | 2890.5 | 376.0 | 1116.3 | 1533.0 | 846.7 |
| 213 | 536.8 | 548.6 | 1139.5 | 2954.3 | 377.7 | 1135.0 | 1558.4 | 861.6 |
| 214 | 544.9 | 557.9 | 1160.4 | 3020.5 | 379.2 | 1154.3 | 1584.3 | 876.7 |
| 215 | 553.0 | 567.3 | 1182.0 | 3089.3 | 380.6 | 1173.8 | 1609.7 | 892.1 |
| 216 | 561.7 | 576.9 | 1204.0 | 3159.7 | 382.1 | 1193.9 | 1636.3 | 907.7 |
| 217 | 570.6 | 586.3 | 1226.6 | 3232.1 | 383.5 | 1214.4 | 1663.6 | 923.4 |
| 218 | 579.4 | 596.3 | 1249.7 | 3306.7 | 384.8 | 1235.4 | 1691.8 | 939.6 |
| 219 | 588.1 | 606.8 | 1273.4 | 3383.2 | 386.2 | 1256.8 | 1721.4 | 956.3 |
| 220 | 597.5 | 617.3 | 1297.7 | 3462.0 | 387.6 | 1278.8 | 1751.0 | 973.5 |
| 221 | 607.2 | 628.0 | 1322.2 | 3543.1 | 389.1 | 1301.3 | 1780.3 | 990.9 |
| 222 | 616.6 | 638.2 | 1347.6 | 3626.4 | 390.7 | 1323.7 | 1810.6 | 1008.7 |
| 223 | 625.9 | 648.5 | 1373.4 | 3711.6 | 392.3 | 1347.0 | 1841.8 | 1027.1 |
| 224 | 634.9 | 659.0 | 1386.3 | 3799.5 | 394.0 | 1371.0 | 1873.7 | 1045.6 |
| 225 | 638.7 | 669.6 | 1405.8 | 3889.7 | 395.7 | 1395.6 | 1906.1 | 1064.8 |
| 226 | 646.5 | 680.4 | 1433.4 | 3982.5 | 397.7 | 1421.0 | 1939.3 | 1084.4 |
| 227 | 661.8 | 691.0 | 1462.2 | 4077.9 | 399.6 | 1447.6 | 1973.1 | 1104.5 |
| 228 | 674.0 | 701.6 | 1491.4 | 4175.9 | 401.7 | 1473.8 | 2007.5 | 1124.9 |
| 229 | 682.0 | 712.4 | 1520.8 | 4276.5 | 404.0 | 1500.5 | 2042.4 | 1145.8 |
| 230 | 691.4 | 723.4 | 1550.4 | 4380.0 | 406.4 | 1528.0 | 2078.1 | 1167.2 |
| 231 | 700.3 | 734.5 | 1580.3 | 4486.0 | 408.9 | 1556.0 | 2114.4 | 1189.1 |
| 232 | 710.7 | 745.4 | 1610.8 | 4594.9 | 411.6 | 1584.8 | 2152.0 | 1211.6 |
| 233 | 720.8 | 756.4 | 1642.8 | 4706.6 | 414.4 | 1614.3 | 2190.0 | 1234.7 |
| 234 | 731.1 | 767.5 | 1676.0 | 4821.4 | 417.5 | 1644.5 | 2229.0 | 1258.0 |
| 235 | 742.0 | 778.9 | 1710.3 | 4939.3 | 420.7 | 1675.5 | 2269.0 | 1281.8 |
| 236 | 753.2 | 790.2 | 1745.9 | 5060.6 | 424.0 | 1707.3 | 2309.7 | 1306.3 |
| 237 | 764.8 | 801.6 | 1782.2 | 5185.5 | 427.5 | 1739.6 | 2351.3 | 1331.3 |
| 238 | 776.7 | 813.1 | 1819.2 | 5312.7 | 431.2 | 1772.7 | 2393.6 | 1356.7 |
| 239 | 788.3 | 824.5 | 1857.1 | 5444.3 | 435.2 | 1806.6 | 2436.9 | 1382.9 |
| 240 | 799.8 | 835.9 | 1895.6 | 5579.3 | 439.3 | 1841.1 | 2481.1 | 1409.7 |
| 241 | 811.9 | 847.5 | 1934.9 | 5717.5 | 443.6 | 1876.3 | 2526.2 | 1437.2 |
| 242 | 824.5 | 859.3 | 1974.8 | 5859.5 | 448.1 | 1912.8 | 2572.5 | 1465.1 |
| 243 | 837.3 | 871.3 | 2015.3 | 6005.4 | 452.8 | 1949.8 | 2620.3 | 1493.5 |
| 244 | 850.3 | 883.4 | 2056.1 | 6155.0 | 457.9 | 1987.7 | 2669.3 | 1522.4 |
| 245 | 863.4 | 895.8 | 2097.8 | 6308.2 | 463.1 | 2026.4 | 2718.8 | 1552.2 |
| 246 | 876.7 | 907.9 | 2140.3 | 6466.6 | 468.5 | 2066.0 | 2770.0 | 1582.6 |
| 247 | 890.4 | 920.1 | 2183.8 | 6627.7 | 474.2 | 2106.3 | 2821.4 | 1613.7 |
| 248 | 904.0 | 932.6 | 2228.3 | 6793.4 | 480.1 | 2147.6 | 2874.4 | 1645.6 |
| 249 | 918.7 | 945.2 | 2273.9 | 6962.7 | 486.3 | 2189.5 | 2928.2 | 1678.2 |
| 250 | 933.3 | 957.8 | 2320.5 | 7136.9 | 492.7 | 2232.5 | 2982.8 | 1711.6 |

### Hardness development

Tables 7 and 8 show the hardness development of the various formulations at 10 °C and RT, respectively. The hardness development of a cured epoxy system is of high practical interest, since a quick hardening improves the work efficiency and allows the subsequent process step to begin. The compositions comprising Novares MP50 and cardanol (examples 7 and 8) show an advantage over the reference systems 1 and 2 as well as over cardanol alone, but also compared to comparative example 6 with benzyl alcohol, in particular at a lower temperature of 10 °C. Again, they show a comparable or even slightly superior performance compared with the state of the art Novares LS 500 (comp. example 3).

**Table 7: Hardness development of the epoxy systems shown in Table 4 (formulations 1 to 8) - Shore D at 10 °C.**

| **Example** | **Accelerator system** | **Shore D hardness at 10 °C** | | | | | | | |
|---|---|---|---|---|---|---|---|---|---|
| | | **Day 1** | | **Day 2** | | **Day 7** | | **Day 14** | |
| | | **3s** | **max** | **3s** | **max** | **3s** | **max** | **3s** | **max** |
| 1 (Ref. 1) | - | 0 | 8 | 45 | 61 | 72 | 73 | 72 | 73 |
| 2 (Ref. 2) | - | 0 | 16 | 52 | 69 | 82 | 84 | 82 | 84 |
| 3 (comp.) | Novares LS 500 | 10 | 38 | 52 | 62 | 84 | 85 | 84 | 85 |
| 4 (comp.) | Novares MP50 | 30 | 64 | 70 | 80 | 84 | 85 | 85 | 85 |
| 5 (comp.) | Cardanol | 5 | 13 | 59 | 68 | 78 | 79 | 80 | 82 |
| 6 (comp.) | Novares MP50 (75) + Benzyl alcohol (25) | 5 | 38 | 64 | 73 | 79 | 80 | 85 | 87 |
| 7 | Novares MP50 (66.5) + Cardanol (33.5) | 20 | 40 | 62 | 74 | 82 | 84 | 83 | 84 |
| 8 | Novares MP50 (50) + Cardanol (50) | 10 | 38 | 58 | 65 | 76 | 78 | 75 | 78 |

**Table 8: Hardness development of the epoxy systems shown in Table 4 (formulations 1 to 8) - Shore D at RT.**

| **Example** | **Accelerator system** | **Shore D hardness at RT** | | | | | | | |
|---|---|---|---|---|---|---|---|---|---|
| | | **Day 1** | | **Day 2** | | **Day 7** | | **Day 14** | |
| | | **3s** | **max** | **3s** | **max** | **3s** | **max** | **3s** | **max** |
| 1 (Ref. 1) | - | 60 | 65 | 78 | 82 | 83 | 85 | 81 | 85 |
| 2 (Ref. 2) | - | 72 | 76 | 83 | 85 | 84 | 86 | 83 | 82 |
| 3 (comp.) | Novares LS 500 | 71 | 75 | 83 | 85 | 85 | 86 | 83 | 85 |
| 4 (comp.) | Novares MP50 | 83 | 85 | 82 | 83 | 85 | 85 | 86 | 86 |
| 5 (comp.) | Cardanol | 82 | 83 | 81 | 82 | 84 | 85 | 81 | 84 |
| 6 (comp.) | Novares MP50 (75) + Benzyl alcohol (25) | 80 | 81 | 80 | 81 | 84 | 86 | 84 | 87 |
| 7 | Novares MP50 (66.5) + Cardanol (33.5) | 75 | 78 | 83 | 85 | 85 | 86 | 84 | 86 |
| 8 | Novares MP50 (50) + Cardanol (50) | 72 | 77 | 83 | 85 | 85 | 86 | 83 | 86 |

### Dryness development

Table 9 shows the five drying degrees along with their relevant criteria. Table 10 shows the achieved dryness degrees of the epoxy formulations over time. The compositions comprising Novares MP50 and cardanol (examples 7 and 8) show a similar performance as Novares LS 500, and initially dry quicker than the composition comprising benzyl alcohol (comp. example 6).

**Table 9: Dryness degrees.**

| **Dryness degree** | **Features** |
|---|---|
| 1 | Levelling |
| 2 | Evaporated solvent |
| 3 | Sol-gel transition |
| 4 | Surface dry |
| 5 | Final dry |

**Table 10: Dryness degree development of the epoxy systems shown in Table 4 (formulations 1 to 8).**

| **Example** | **Accelerator system** | **Dryness degree** | | | | |
|---|---|---|---|---|---|---|
| | | **1** | **2** | **3** | **4** | **5** |
| | | **Time until dryness degree is reached [min]** | | | | |
| 1 (Ref. 1) | - | 42 | 230 | 679 | 988 | 1204 |
| 2 (Ref. 2) | - | 124 | 360 | 706 | 877 | 1011 |
| 3 (comp.) | Novares LS 500 | 23 | 235 | 595 | 705 | 1048 |
| 4 (comp.) | Novares MP50 | 42 | 124 | 526 | 641 | 725 |
| 5 (comp.) | Cardanol | 65 | 305 | 623 | 785 | 1057 |
| 6 (comp.) | Novares MP50 (75) + Benzyl alcohol (25) | 46 | 193 | 513 | 605 | 753 |
| 7 | Novares MP50 (66.5) + Cardanol (33.5) | 37 | 212 | 577 | 725 | 1025 |
| 8 | Novares MP50 (50) + Cardanol (50) | 28 | 231 | 577 | 767 | 909 |

### Tensile strength and maximum elongation via tensile testing

The results of the measurements and calculated average values are shown in Table 11. As a multifunctional accelerator, Novares LS 500 modifies the mechanical properties of the cured epoxy resins towards high tensile strength and high elongation at break. With regards to those properties, cardanol-based products show a significant difference as cardanol tends to reduce the tensile strength and increase the plastic deformation. The combination of Novares MP50 and cardanol compensates for these disadvantages of cardanol and increases the tensile strength to values comparable to those of the state of the art Novares LS 500. Low-molecular-mass accelerators like Novares LS 500 often cause softening of the epoxy systems that are exemplified by a high elongation at break. The MP50/cardanol examples 14 and 15 show only a small effect on the mechanical properties compared to the epoxy system without any accelerator (example 9, Ref. 3). A comparison to the comparative example comprising benzyl alcohol (example 13) also shows the excellent properties of the MP50/cardanol compositions, as the tensile strength of example 13 is below even that of pure cardanol (example 12).

**Table 11: Tensile tests.**

| **Item** | **Thickness [mm]** | **Width [mm]** | **Gauge length [mm]** | **Tensile strength [MPa]** | **Elogantion at break [%]** |
|---|---|---|---|---|---|
| Example 9 (Ref. 3, no accelerator) | | | | | |
| Sample 9-1 | 3.81 | 9.98 | 130 | 43.9 | 3.2 |
| Sample 9-2 | 3.77 | 10.02 | 130 | 51.6 | 4.1 |
| Sample 9-3 | 3.79 | 9.98 | 130 | 51.6 | 3.8 |
| Average | | | | 49.0 | 3.7 |

| Example 10 (Novares LS 500) | | | | | |
|---|---|---|---|---|---|
| Sample 10-1 | 3.88 | 10.00 | 130 | 52.7 | 5.3 |
| Sample 10-2 | 3.82 | 10.01 | 130 | 53.0 | 6.7 |
| Sample 10-3 | 3.80 | 9.96 | 130 | 52.6 | 5.4 |
| Average | | | | 52.8 | 5.8 |

| Example 11 (Novares MP50) | | | | | |
|---|---|---|---|---|---|
| Sample 11-1 | 3.87 | 10.08 | 130 | 47.6 | 3.5 |
| Sample 11-2 | 3.84 | 10.11 | 130 | 50.3 | 3.9 |
| Sample 11-3 | 3.89 | 10.11 | 130 | 53.1 | 4.0 |
| Average | | | | 50.3 | 3.8 |

| Example 12 (Cardanol | | | | | |
|---|---|---|---|---|---|
| Sample 12-1 | 3.86 | 10.03 | 130 | 40.2 | 5.6 |
| Sample 12-2 | 3.84 | 9.98 | 130 | 40.6 | 6.1 |
| Sample 12-3 | 3.86 | 10.01 | 130 | 40.1 | 5.9 |
| Average | | | | 40.3 | 5.9 |

| Example 13 (Novares MP50 (75) + Benzyl alcohol (25)) | | | | | |
|---|---|---|---|---|---|
| Sample 13-1 | 3.77 | 9.99 | 130 | 33.1 | 2.7 |
| Sample 13-2 | 3.8 | 10.0 | 130 | 31.8 | 2.7 |
| Sample 13-3 | 3.81 | 10.0 | 130 | 30.8 | 2.6 |
| Average | | | | 31.9 | 2.6 |

| Example 14 (Novares MP50 (66.5) + Cardanol (33.5)) | | | | | |
|---|---|---|---|---|---|
| Sample 14-1 | 3.81 | 10.01 | 130 | 53.6 | 2.7 |
| Sample 14-2 | 3.83 | 9.99 | 130 | 46.2 | 2.7 |
| Sample 14-3 | 3.81 | 9.99 | 130 | 44.1 | 2.6 |
| Average | | | | 48.0 | 2.6 |

| Example 15 (Novares MP50 (50) + Cardanol (50)) | | | | | |
|---|---|---|---|---|---|
| Sample 15-1 | 3.84 | 10.07 | 130 | 52.4 | 3.8 |
| Sample 15-2 | 3.86 | 10.02 | 130 | 53.4 | 3.9 |
| Sample 15-3 | 3.87 | 10.05 | 130 | 51.6 | 3.9 |
| Average | | | | 52.5 | 3.8 |

### Impact on chemical resistance

The results of the chemical resistance tests are shown in Tables 12 to 15, with a higher weight change indicating lower resistance.

**Table 12: Acetic acid (10 wt.%) uptake.**

| **Example** | **Accelerator system** | **Weight change [wt.%]** | | |
|---|---|---|---|---|
| | | **Day 1** | **Day 7** | **Day 42** |
| 1 (Ref. 1) | - | 1.04 | 2.97 | 5.63 |
| 2 (Ref. 2) | - | 1.46 | 4.53 | 9.01 |
| 3 (comp.) | Novares LS 500 | 0.69 | 2.18 | 4.38 |
| 4 (comp.) | Novares MP50 | 0.73 | 2.48 | 5.05 |
| 5 (comp.) | Cardanol | 0.82 | 2.49 | 4.90 |
| 6 (comp.) | Novares MP50 (75) + Benzyl alcohol (25) | 0.78 | 2.50 | 5.02 |
| 7 | Novares MP50 (66.5) + Cardanol (33.5) | 0.70 | 2.31 | 4.64 |
| 8 | Novares MP50 (50) + Cardanol (50) | 0.65 | 2.05 | 4.14 |

As shown in Table 12, both compositions comprising Novares MP50 and cardanol (examples 7 and 8) show a beneficial impact on resistance towards acidic conditions compared to the reference examples 1 and 2 without accelerator as well as the single components (comp. examples 4 and 5), demonstrating a synergistic effect. Both compositions moreover perform comparable to the styrenated phenol Novares LS 500 (comp. example 3) and better than the combination of Novares MP50 and benzyl alcohol (comp. example 6).

**Table 13: Sodium hydroxide (5 wt.%) uptake.**

| **Example** | **Accelerator system** | **Weight change [wt.%]** | | |
|---|---|---|---|---|
| | | **Day 1** | **Day 7** | **Day 42** |
| 1 (Ref. 1) | - | 0.13 | 0.65 | 1.32 |
| 2 (Ref. 2) | - | 0.09 | 0.45 | 1.02 |
| 3 (comp.) | Novares LS 500 | 0.09 | 0.42 | 0.95 |
| 4 (comp.) | Novares MP50 | 0.08 | 0.40 | 0.95 |
| 5 (comp.) | Cardanol | 0.09 | 0.47 | 1.02 |
| 6 (comp.) | Novares MP50 (75) + Benzyl alcohol (25) | 0.09 | 0.49 | 1.07 |
| 7 | Novares MP50 (66.5) + Cardanol (33.5) | 0.08 | 0.43 | 0.97 |
| 8 | Novares MP50 (50) + Cardanol (50) | 0.09 | 0.44 | 1.00 |

Under the basic conditions shown in Table 13, the compositions comprising Novares MP50 and cardanol (examples 7 and 8) show a comparable performance as reference example 2, Novares LS 500 (comp. example 3), and the single components (comp. examples 4 and 5), while outperforming the combination of Novares MP50 and benzyl alcohol (comp. example 6) and in particular reference example 1 with higher benzyl alcohol content.

**Table 14: Xylene uptake.**

| **Example** | **Accelerator system** | **Weight change [wt.%]** | | |
|---|---|---|---|---|
| | | **Day 1** | **Day 7** | **Day 42** |
| 1 (Ref. 1) | - | 0.00 | 1.46 | 8.85 |
| 2 (Ref. 2) | - | 0.06 | 1.36 | 5.41 |
| 3 (comp.) | Novares LS 500 | 0,00 | 1.08 | 10.32 |
| 4 (comp.) | Novares MP50 | 0.02 | 0.35 | 7.66 |
| 5 (comp.) | Cardanol | 0.00 | 4.59 | 21.05 |
| 6 (comp.) | Novares MP50 (75) + Benzyl alcohol (25) | 0.05 | 1.47 | 3.03 |
| 7 | Novares MP50 (66.5) + Cardanol (33.5) | 0.00 | 0.46 | 5.55 |
| 8 | Novares MP50 (50) + Cardanol (50) | 0.00 | 0.61 | 6.98 |

With regard to organic solvents as shown in Table 14, the samples with compositions comprising Novares MP50 and cardanol (examples 7 and 8) show a highly improved resistance towards xylene in contrast to the single compounds (comp. examples 4 and 5) and also the styrenated phenol Novares LS 500 (comp. example 3).

**Table 15: Water uptake.**

| **Example** | **Accelerator system** | **Weight change [wt.%]** | | |
|---|---|---|---|---|
| | | **Day 1** | **Day 7** | **Day 42** |
| 1 (Ref. 1) | - | 0.18 | 0.74 | 1.49 |
| 2 (Ref. 2) | - | 0.08 | 0.46 | 1.01 |
| 3 (comp.) | Novares LS 500 | 0.11 | 0.48 | 1.11 |
| 4 (comp.) | Novares MP50 | 0.13 | 0.48 | 1.07 |
| 5 (comp.) | Cardanol | 0.09 | 0.50 | 1.11 |
| 6 (comp.) | Novares MP50 (75) + Benzyl alcohol (25) | 0.12 | 0.52 | 1.18 |
| 7 | Novares MP50 (66.5) + Cardanol (33.5) | 0.07 | 0.44 | 1.04 |
| 8 | Novares MP50 (50) + Cardanol (50) | 0.00 | 0.38 | 1.01 |

In water, as shown in Table 15, the samples with compositions comprising Novares MP50 and cardanol (examples 7 and 8) perform similar to reference example 2, while showing a slightly higher resistance than the single components (comp. examples 4 and 5) as well than comparative examples 3 (Novares LS 500) and 6 (mixture of Novares MP50 and benzyl alcohol), and a considerably improved resistance compared to reference example 1.

Overall, the chemical resistance tests demonstrate that the resins based on the composition comprising Novares MP50 and cardanol are a suitable modifier for coatings systems with an all-around improvement against aqueous as well as organic impact.

## Claims

1. A composition comprising
a bio-based phenol compound, in particular selected from the group consisting of eugenol, thymol, guaiacol, cardanol and mixtures thereof, preferably cardanol, and
a phenolic polymer having a number average molar mass (Mn) of from 200 to 1,500 g/mol, comprising a phenol compound, a linker group L and end group E, said phenolic polymer having the structure as presented in formula 1 below: 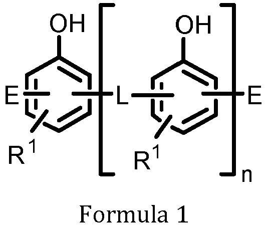 wherein the linker group L has the meaning of 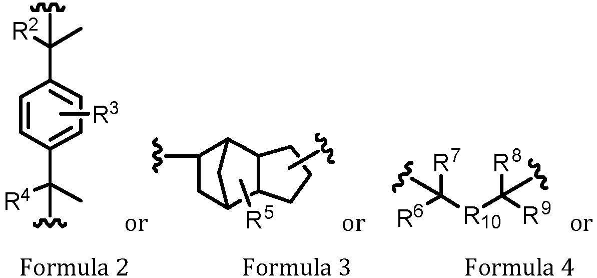 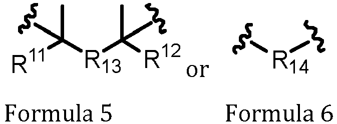 each end group E has the meaning of H or is a group of formula 2, 3, 4, 5 or 6 with only one bond to a phenol compound in formula 1 or has the meaning of 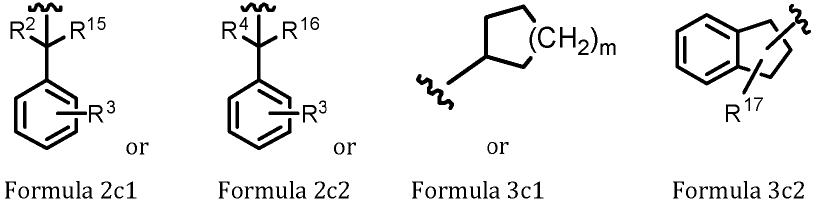 and wherein
R¹ is H, C₁₋₁₅ alkyl, C₁₋₁₅ oxyalkyl, or C₆H₅(CR¹⁸R¹⁹)ₒ-Z-, preferably H, C₁₋₁₅ alkyl, or C₁₋₁₅ oxyalkyl,
R², R⁴, R⁶, R⁷, R⁸, R⁹, R¹¹, and R¹² are independently from each other H or C₁₋₅ alkyl, R³ and R⁵ are H, OH, NO₂, halogen, C₁₋₅ alkyl, or C₁₋₅ oxyalkyl,
R₁₀ and R₁₃ are C₁₋₅ alkyl or C₅₋₆ cycloalkyl,
R₁₄ is C₅₋₁₂ cycloalkyl, optionally substituted with a methyl or an ethyl group, R¹⁵, R¹⁶, and R¹⁷ are independently from each other H or C₁₋₅ alkyl, preferably -CH₃,
R¹⁸ and R¹⁹ are independently of each other H or CH₃,
Z is a covalent bond or -O-,
o is 1 or 0,
m is an integer from 1 to 7, and
n is an integer from 2 to 21.

2. The composition according to claim 1, comprising 1 wt.% to 70 wt.%, preferably 5 wt.% to 60 wt.%, more preferably 15 wt.% to 50 wt.%, even more preferably 25 wt.% to 40 wt.%, bio-based phenol compound, based on the mass of the composition.

3. The composition according to claim 1 or 2, wherein the composition has a viscosity at 25 °C of 500 to 50,000 mPas, preferably 500 to 20,000 mPas, more preferably of 1,000 to 15,000 mPas, even more preferably of 1,000 to 5,000 mPas, and/or an OH content of 5 wt.% to 13 wt.%, in particular 6 wt.% to 9 wt.%, more particularly 6 wt.% to 8 wt.%, based on the total mass of the composition, and/or a weight loss at 105 °C after 2 hours of less than 1 %, preferably of less than 0.9 %, more preferably of less than 0.8 %, based on the total mass of the composition.

4. The composition according to any one of the preceding claims, wherein the bio-based phenol compound, in particular cardanol, has a Gardner color number of 4 or less, preferably of 2 or less, an OH content of 5 wt.% or more, based on the mass of the bio-based phenol compound, and/or an acid number of 5 mg/g or less, preferably 3 mg/g or less.

5. The composition according to any one of the preceding claims, wherein the composition has a Gardner color number of 4 or less, preferably 2 or less.

6. The composition according to any one of the preceding claims, wherein in the phenolic polymer the linker group L has the meaning of 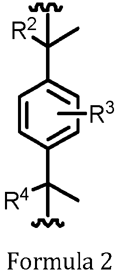 wherein R², R³, and R⁴ are as defined in claim 1, in particular H.

7. The composition according to any one of the preceding claims, wherein in the phenolic polymer the end group E has the meaning of 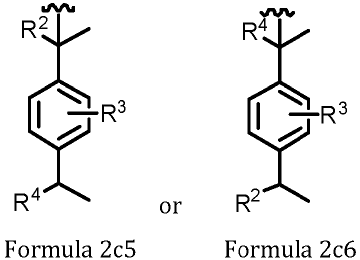 wherein R², R³, and R⁴ are as defined in claim 1, in particular H.

8. The composition according to any one of the preceding claims, wherein the phenolic polymer has a softening point according to ASTM D 3461 up to 170 °C, preferably of 40 °C to 120 °C, more preferably of 50 °C to 100 °C.

9. An epoxy system comprising an epoxy resin and the composition according to any one of claims 1 to 8.

10. The epoxy system according to claim 9, further comprising a hardener comprising amine, anhydride, phenolic, and/or thiol, in particular amine, functionalities.

11. Use of a composition according to any one of claims 1 to 8 as an accelerator for the curing of epoxy resins, in particular in the presence of a hardener comprising amine functionalities
or
as a hardener for epoxy resins, in particular in the presence of a co-hardener comprising amine functionalities.

12. Kit-of-parts comprising an epoxy resin, a composition according to any one of claims 1 to 8, and a hardener comprising amine, anhydride, phenolic, and/or thiol, in particular amine, functionalities.

13. Kit-of-parts according to claim 12, wherein the cardanol, the phenolic polymer, and the hardener are present as a mixture that optionally contains a solvent and/or a thinner.

14. Formulation comprising a composition according to any one of claims 1 to 8 and a hardener comprising amine, anhydride, phenolic, and/or thiol, in particular amine, functionalities.

15. Use of a bio-based phenol compound, in particular selected from the group consisting of eugenol, thymol, guaiacol, cardanol and mixtures thereof, preferably cardanol, as viscosity modifier and/or compatibilizer for phenolic polymers, wherein the phenolic polymer has a weight-average molecular weight of 200 to 3,000 g/mol, preferably of 500 to 2,500 g/mol, more preferably of 500 to 2,000 g/mol and/or is substantially free of formaldehyde and/or is a phenolic polymer as described in any one of claims 1 or 4 to 6.

16. A composition comprising a bio-based phenol compound, in particular selected from the group consisting of eugenol, thymol, guaiacol, cardanol and mixtures thereof, preferably cardanol, and a hydrocarbon resin, wherein the hydrocarbon resin has a weight-average molecular weight of 300 to 800 g/mol, preferably of 300 to 500 g/mol, more preferably of 300 to 400 g/mol, and/or a softening point according to ASTM D 3461 of 10 °C to 140 °C, preferably of 10 °C to 90 °C, more preferably of 10 °C to 30 °C.

17. The composition according to claim 16, comprising 1 wt.% to 70 wt.%, preferably 5 wt.% to 60 wt.%, more preferably 15 wt.% to 50 wt.%, even more preferably 25 wt.% to 40 wt.%, bio-based phenol compound, based on the mass of the composition.

18. The composition according to claim 16 or 17, wherein the composition has a viscosity at 25 °C of 500 to 50,000 mPas, preferably 500 to 20,000 mPas, more preferably of 1,000 to 15,000 mPas, even more preferably of 1,000 to 5,000 mPas, and/or an OH content of 5 wt.% to 13 wt.%, in particular 6 wt.% to 9 wt.%, more particularly 6 wt.% to 8 wt.%, based on the total mass of the composition, and/or a weight loss after 2 hours at 105 °C of less than 1 %, preferably of less than 0.9 %, more preferably of less than 0.8 %, based on the total mass of the composition.

19. The composition according to any one of the preceding claims, wherein the bio-based phenol compound, in particular cardanol, has a Gardner color number of 4 or less, preferably of 2 or less, an OH content of 5 wt.% or more, based on the amount of cardanol, and/or an acid number of 5 mg/g or less, preferably 3 mg/g or less..

20. The composition according to any one of the preceding claims, wherein the composition has a Gardner color number of 4 or less, preferably 2 or less.

21. Use of the composition according to any one of claims 16 to 20 as a coating, a modifier in rubber products, in particular to improve the mechanical and dynamic properties in rubber products, in bitumen, in particular as an additive and/or as a hydrophobizing agent in bitumen, in particular for asphalt, or as a modifier and/or hydrophobizing agent in printing inks.

22. Use of cardanol as viscosity modifier and/or compatibilizer for hydrocarbon resins, wherein the hydrocarbon resin has a weight-average molecular weight of 300 to 800 g/mol, preferably of 300 to 500 g/mol, more preferably of 300 to 400 g/mol, and/or comprises repeating units of alpha-methylstyrene and/or styrene.
